# EUROPÄISCHE PATENTSCHRIFT

(11) **EP 0 445 530 B1**
(45) Veröffentlichungstag und Bekanntmachung des Hinweises auf die Patenterteilung: **02.11.1994**
(21) Anmeldenummer: 91101471.0
(22) Anmeldetag: 04.02.1991
(51) Int. Cl.: C05F 5/00, C05F 11/00, C05G 3/00, C05G 1/00, C09K 17/00

(54) **Holz- und/oder Trestergranulat und dessen Verwendung**
Granulate containing waste from fruit juice pressing, spent grains and/or wood and use thereof
Granulés contenant de la pulpe de fruits, des déchets de brasserie et/ou du bois et leur utilisation

(30) Priorität: 05.02.1990 DE 4003395; 19.12.1990 DE 4040772; 19.12.1990 DE 4040771
(43) Veröffentlichungstag der Anmeldung: 11.09.1991
(73) Patentinhaber: MFE "Marienfelde" GmbH, D-91139 Roth (DE)
(72) Erfinder: Brill, Holger, Dr., W-2000 Hamburg 50 (DE); Waitszies, Peter, W-2000 Hamburg 50 (DE)
(74) Vertreter: Koepe, Gerd L., Dipl.-Chem.

(56) Entgegenhaltungen:
- CA-A- 863 862
- DE-A- 2 704 410
- FR-A- 2 409 247
- US-A- 4 246 018

## Beschreibung

Die vorliegende Erfindung betrifft ein in partikulärer Form vorliegendes Material. Insbesondere betrifft die vorliegende Erfindung ein Holz- und/oder Trestergranulatmaterial, dessen Kern aus einem oder mehreren verschiedenen Holzgranulaten und/oder Trestersorten gegebenenfalls unterschiedlichen Ursprungs und einer Verkapselung besteht, die für eine verbesserte Handhabbarkeit sorgt. Der Holz- und/oder Tresterkern und/oder die Verkapselung können zudem gegebenenfalls vorteilhafte Wirkstoffe enthalten. Die Erfindung betrifft darüberhinaus ein Trestergranulat ohne Verkapselung. Die Erfindung betrifft letztlich auch die Verwendung eines derartigen verkapselten Holz- und/oder Trestergranulats oder unverkapselten Trestergranulats.

Die Düngung landwirtschaftlich oder gartenwirtschaftlich genutzter Flächen zum Ersatz der durch Pflanzenanbau dem Boden entzogenen wichtigsten Pflanzennährstoffe und damit letztlich zum Erhalt bzw. zur Erhöhung der Bodenfruchtbarkeit erfolgt nach neueren wissenschaftlichen Erkenntnissen nicht allein durch Zufuhr mineralischer Substanzen (beispielsweise Phosphor, Kalium und Stickstoff). Vielmehr steht nach diesen wissenschaftlichen und praktischen Erkenntnissen der Notwendigkeit eines ausgeglichenen Mineral-Haushalts zumindest gleichwertig die Bildung bzw. der Erhalt einer für ein gesundes Bodenklima erforderlichen Bodenfauna und die Schaffung optimaler Lebensbedingungen für Mikroorganismen gegenüber, die die Bodenbeschaffenheit beeinflussen. Diese Mikroorganismen benötigen - wenigstens teilweise - auch zusätzliche organische Nährstoffe.

Ein klassisches Verfahren zur Zufuhr derartiger organischer Nährstoffe besteht in der Vermischung der obersten Bodenschichten mit Torf. Dadurch läßt sich der Boden bekanntermaßen nicht nur in gewissem Umfang auflockern, sondern es werden ihm auch organische Nährstoffe zugeführt.

Beides dient einer Verbesserung der Bodenqualität. Die Verwendung und der dafür notwendige Abbau des Torfs wird jedoch in zunehmendem Maße kritisiert, da er einen Abbau der Moore zur Folge hat und ökologisch wichtige Feuchtgebiete unwiederbringlich verlorengehen.

In jüngerer Zeit wurden auch Düngermaterialien beschrieben, die im wesentlichen aus Holzabfällen bestehen. In solchen Düngemitteln kamen überwiegend Baumrinde oder bei der Verarbeitung von Stammholz anfallende Holzabfälle zum Einsatz. So beschreibt die DE-OS 3424768 ein Düngermaterial aus Holzabfällen, Baumrinde, Asche oder dergleichen. Das Holzprodukt wird zerkleinert, mit Asche und danach mit Torf vermischt, bei hoher Temperatur unter Druck erhitzt und danach mit einer Harnstofflösung behandelt. Das so erhaltene Material wird anschließend granuliert und danach die erhaltenen Körner mit Asche überzogen.

Die EP-B 0004632 offenbart einen Humusbildner bzw. Dünger auf natürlicher Basis mit zerkleinerten, gegebenenfalls entfeuchteten und bedampften Rindenmaterialien. Zur Herstellung eines solchen Düngers wird die Rinde mit Trockendampf von mehr als 100 °C behandelt und mit einem in Wasser schwer oder nicht löslichen Stickstoffträger gemischt.

Die EP-B 0104355 sowie die DE-OS 3235452 offenbaren einen vollwertigen Humusträger bzw. Dünger auf Basis von Rindenmaterialien, dessen Herstellung in der Weise abläuft, daß der Rinde vor und/oder nach der Zerkleinerung ein wasserlöslicher Stickstoffträger zugesetzt und das Gemisch nach Einstellung eines Wassergehalts von 60 bis 70 Gew.-% einer Fermentierung bei erhöhten Temperaturen und einem pH-Wert im schwach sauren bis schwach alkalischen Bereich unterworfen wird. Der in dem Dünger enthaltene Stickstoffträger ist bevorzugt Harnstoff.

Die FR-A 2,409,247 betrifft eine Zubereitung zur Regulation der Löslichkeit von Hilfsstoffen in Solen, die eine in partikulärer Form vorliegende organische Masse, zu der auch Holzabfall gezählt wird, umfaßt, die mit einer mit Wasser nicht benetzbaren Polymermasse überzogen ist, beispielsweise auf der Basis von Vinylestern, Estern von (Meth-)Acrylsäuren und Fettalkoholen und dergleichen.

Die DE-A 34 24 768 betrifft ein Verfahren zur Herstellung von Düngemitteln aus Holzabfällen bzw. Rinde, Torf und Harnstoff und einem Überzug aus Holzasche und/oder Rindenasche, also einem vorwiegend anorganischen Material.

Die genannten, als Dünger verwendbaren Materialien des Standes der Technik versorgen zwar den Boden mit den gewünschten organischen bzw. anorganischen Nährstoffen, die für das Wachstum von Pflanzen mehr oder weniger essentiell sind, tragen jedoch ausnahmslos dem wichtigen Erfordernis nicht Rechnung, daß es für die langfristige Bewirtschaftung des Bodens und der Entwicklung einer ausgewogenen Bodenfauna einschließlich nützlicher Mikroorganismenstämme auch einer bestimmten physikalischen Bodenbeschaffenheit bedarf, die Voraussetzung für eine zufriedenstellende Humusbildung und damit auch für das spätere Wachstum der Pflanzen ist.

Im Stand der Technik war außerdem beschrieben worden, daß man aus der Herstellung von Obstsaft stammende sogenannte Obstschlempen, d. h. die beim Abpressen der flüssigen Fruchtbestandteile entstehenden, mehr oder weniger flüssigen Rückstände, zur Bodenverbesserung in Böden einbringen kann, die an natürlichen Nährstoffen verarmt sind. Auf dieses Ziel gerichtete Versuche sind jedoch bisher weitgehend fehlgeschlagen, da die Einarbeitung solcher Schlempen regelmäßig dazu führte, daß sich die für eine gesunde Bodenbeschaffenheit erforderlichen Makroporenräume mit den flüssigen Schlempen zusetzten` Eine Durchlüftung des Bodens erfolgte danach nicht mehr. Regelmäßig wurde beobachtet, daß solche Böden versauerten bzw. in eine anaerobe (und damit stinkende) Humifizierung übergingen. Die Bodenqualität verschlechterte sich zunehmend, und der gewünschte Erfolg, eine verbesserte Bodenbeschaffenheit zu erhalten, wurde nicht erreicht.

Unter Treber oder Trester - beide Begriffe werden in der vorliegenden Anmeldung und in den Patentansprüche gleichwertig verwendet - versteht man den mehr oder weniger große Flüssigkeits-Restmengen enthaltenden Preßrückstand, der nach Abpressen von Obstsaft aus zur Saftherstellung verwendeten Obstsorten, von Traubensaft aus den zerquetschten Schalen, Kernen und Stielen von Trauben bzw. bei der Würzebereitung in der Bierherstellung aus Malzschrot erhalten wird. Dieser Trester wird üblicherweise als Futtermittel oder - im Falle von Trauben - auch zur Herstellung von Branntwein verwendet. In der Vergangenheit wurde auch versucht, Trester für die Anreicherung des Bodens mit organischen Nährstoffen zu verwenden. Diese Versuche waren jedoch insofern nicht erfolgreich, als die Böden versauerten und verschlammten. Damit wurde eine wichtige Eigenschaft des Bodens, nämlich eine lockere Bodenbeschaffenheit mit Poren für den Luftzutritt nicht erreicht. Die Folge war, daß eine Verbesserung der Bodenbeschaffenheit auf diesem Wege nicht erfolgte.

Darüberhinaus konnte auf diesem Wege einem wichtigen Erfordernis nicht Rechnung getragen werden, daß es für die langfristige Bewirtschaftung des Bodens und die Entwicklung einer ausgewogenen Bodenfauna einschließlich nützlicher Mikroorganismenstämme auch der Versorgung des Bodens mit anorganischen Nährstoffen sowie der Einstellung einer bestimmten physikalischen Bodenbeschaffenheit bedarf. Beides ist Voraussetzung für eine zufriedenstellende Humusbildung und damit auch für das spätere Wachstum der Pflanzen.

Die Hauptaufgabe der vorliegenden Erfindung bestand in der Bereitstellung eines einen Kern aus einem organischen Material natürlicher Herkunft und gegebenenfalls eine Umhüllung aus einem ebenfalls organischen Material natürlicher oder synthetischer Herkunft umfassenden teilchenartigen Materials. Dieses sollte problemlos handhabbar sein, aus preiswerten organischen Ausgangsmaterialien herstellbar sein, wobei in Bezug auf die Ausgangsmaterialien der Recycling-Gedanke möglichst weitgehend verwirklicht werden sollte, und bevorzugterweise geeignet sein, als natürlicher Dünger und/oder Bodenverbesserer verwendet zu werden. Aus dieser verschiedene Einzelaspekte der Erfindung umfassenden allgemeinen Aufgabe ergeben sich nachfolgend genannte Teilaufgaben für einzelne bevorzugte Ausführungsformen der Erfindung.

Eine weitere Aufgabe der vorliegenden Erfindung bestand darin, ein verkapseltes Holzgranulat bereitzustellen. Dieses sollte in bevorzugter Weise so beschaffen sein, daß man es als Düngemittel mit dem Ziel verwenden kann, dem Boden nicht nur die erforderlichen mineralischen oder organischen Komponenten zuzusetzen, die ein optimales Pflanzenwachstum ermöglichen, sondern auch eine für ein gutes Pflanzenwachstum vorauszusetzende physikalische Beschaffenheit der Bodenkrume herbeizuführen.

Eine weitere Aufgabe der vorliegenden Erfindung bestand darin, ein verkapseltes Holzgranulat bereitzustellen, das unter üblichen, d. h. Unterschiede in der Temperatur, Luftfeuchtigkeit usw. umfassenden, Lagerbedingungen ohne Veränderungen in seiner Konsistenz gelagert werden kann. Insbesondere war sicherzustellen, daß Unterschiede der Umweltbedingungen, insbesondere der (Luft-) Feuchtigkeit, die Wirksamkeit und Handhabbarkeit des verkapselten Holzgranulats nicht beeinflussen.

Eine weitere Aufgabe der vorliegenden Erfindung bestand darin, ein verkapseltes Holzgranulat bereitzustellen, das mit einfachen Methoden und unter Einsatz preisgünstiger Rohstoffe hergestellt werden kann. Darüberhinaus war Aufgabe der Erfindung, den nachwachsenden Rohstoff Holz nach der Entnahme aus der Natur dem natürlichen Stoffkreislauf wieder zuzuführen (Recycling-Gedanke), wobei die Mineralisierung der natürlichen Rohstoffe ökologischen Grundsätzen entspricht.

Eine weitere Aufgabe der Erfindung ist darin zu sehen, ein verkapseltes Holzgranulat bereitzustellen, mit dem möglicherweise eine Regeneration von Böden ermöglicht werden kann, in denen aufgrund langjähriger intensiver Bewirtschaftung und/oder von schädlichen Umwelteinflüssen die natürlichen Lebensbedingungen für Mikroorganismen als wesentliche Voraussetzung für eine gute Humusbildung verlorengegangen sind. Es waren also Materialien vorzusehen, die selbst unter vergleichsweise ungünstigen Umweltbedingungen eine Regeneration des Bodens herbeiführen können.

Eine weitere wesentliche Aufgabe der Erfindung bestand neben der Erfüllung der obigen Erfordernisse in der Idee, in der großindustriellen Produktion preiswert und in großen Mengen anfallende und sonst nicht oder nur begrenzt verwertbare, der Natur entnommene Rohstoffe dem natürlichen Stoffkreislauf wieder zuzuführen.

Eine weitere Aufgabe der vorliegenden Erfindung bestand darin, ein verkapseltes oder unverkapseltes Trestergranulat bereitzustellen. Dieses sollte in bevorzugter Weise so beschaffen sein, daß man es als Düngemittel mit dem Ziel verwenden kann, dem Boden nicht nur die erforderlichen mineralischen oder organischen Komponenten zuzusetzen, die ein optimales Pflanzenwachstum ermöglichen, sondern auch eine für ein gutes Pflanzenwachstum wichtige physikalische Beschaffenheit der Bodenkrume herbeizuführen.

Eine weitere Aufgabe der vorliegenden Erfindung bestand darin, ein verkapseltes oder unverkapseltes Trestergranulat bereitzustellen, das unter üblichen, d. h. unterschiedliche Temperatur, Luftfeuchtigkeit usw. umfassenden Lagerbedingungen ohne Veränderungen in seiner Konsistenz gelagert werden kann. Insbesondere war sicherzustellen, daß Unterschiede der Umweltbedingungen, insbesondere der (Luft-) Feuchtigkeit die Wirksamkeit und Handhabbarkeit des Trestergranulats nicht beeinflussen.

Eine weitere Aufgabe der vorliegenden Erfindung bestand darin, ein verkapseltes oder unverkapseltes Trestergranulat bereitzustellen, das mit einfachen Methoden und unter Einsatz preisgünstiger Rohstoffe hergestellt werden kann. Darüberhinaus war Aufgabe der Erfindung, die Abfallstoffe aus der Verwertung pflanzlicher Produkte nach der Entnahme aus der Natur dem natürlichen Stoffkreislauf wieder zuzuführen (Recycling-Gedanke), wobei die Mineralisierung der natürlichen Rohstoffe ökologischen Grundsätzen entspricht.

Eine weitere Aufgabe der Erfindung ist darin zu sehen, ein verkapseltes oder unverkapseltes Trestergranulat bereitzustellen, mit dem unter üblichen Bedingungen eine Regeneration von Böden ermöglicht werden kann, in denen aufgrund langjähriger intensiver Bewirtschaftung und/oder von schädlichen Umwelteinflüssen (z. B. saurer Regen) die natürlichen Lebensbedingungen für Mikroorganismen als wesentliche Voraussetzung für eine gute Humusbildung verlorengegangen sind. Es waren also Materialien vorzusehen, die selbst unter vergleichsweise ungünstigen Umweltbedingungen eine Regeneration des Bodens herbeiführen können.

Überraschend wurde nunmehr gefunden, daß die genannten und auch weitere, sich aus der Beschreibung im einzelnen ergebende Aufgaben mit dem verkapselten Holz- und/oder Trestergranulat oder dem unverkapselten Trestergranulat gelöst werden können, das nachfolgend im einzelnen beschrieben wird.

Überraschend wurde auch gefunden, daß man bei Verwendung organischer Abfallstoffe, wie sie nachfolgend im einzelnen genannt sind, ein verbessertes verkapseltes Holzgranulat bereitstellen kann, das bei Einbringung in den Boden als ein Dünger verwendet werden kann, der sowohl kurzfristig als auch langfristig zu einer verbesserten Bodenbeschaffenheit führt.

Überraschend wurde auch gefunden, daß die genannten und auch weitere, sich aus der Beschreibung im einzelnen ergebende Aufgaben mit den Trestergranulaten gemäß der Erfindung gelöst werden können, die nachfolgend im einzelnen beschrieben werden.

Die Erfindung betrifft ein in partikulärer Form vorliegendes Material, das einen Kern aus einem organischen Material natürlicher Herkunft aus der Gruppe Holz und Trester und deren Mischungen und eine in den Kern eingearbeitete oder den Kern umhüllende Masse umfaßt, die ein oder mehrere härtbare(s), wasserlösliche(s) oder in Wasser dispergierbare(s) oder quellbare(s) natürliche(s) Polymer(e) oder ein oder mehrere davon abgeleitete(s) Derivat(e) oder deren Mischungen umfaßt, wobei die Masse in dem in partikulärer Form vorliegenden Material ausgehärtet ist.

Die Erfindung betrifft in einer bevorzugten Ausführungsform ein verkapseltes Holzgranulat, das aus einem Kern aus einer oder mehreren Holzsorte(n) in zerkleinerter Form und einer den Kern umgebenden Umhüllung aus einem härtbaren, wasserlöslichen oder in Wasser quellbaren Polymer besteht.

Die Erfindung betrifft in einer weiteren bevorzugten Ausführungsform ein verkapseltes Holzgranulat, das aus einem Kern aus einer oder mehreren Holzsorten in zerkleinerter Form und einer den Kern umgebenden Umhüllung aus einem härtbaren, wasserlöslichen oder in Wasser quellbaren Protein oder Polysaccharid besteht, worin der Kern mit einem oder mehreren organischen Stickstoffträger(n) aus der Gruppe Obstschlempe, Obsttrester, Citrustrester, Weintrester, Biertrester, Brennesselmehl, Wildkräutermehl und Melasse beaufschlagt ist.

Die Erfindung betrifft in einer weiteren bevorzugten Ausführungsform ein Trestergranulat, das eine oder mehrere Trestersorte(n) in zerkleinerter Form und stabilisierende Komponenten enthält, die ein oder mehrere härtbare(s), wasserlösliche(s) oder in Wasser dispergierbare(s) oder quellbare(s) natürliche(s) Polymer(e) oder ein oder mehrere davon abgeleitete(s) Derivat(e) umfassen. Besonders bevorzugt ist dabei eine Ausführungsform des erfindungsgemäßen Trestergranulats, in der das Granulat entweder aus einem eine oder mehrere Trestersorte(n) in zerkleinerter Form und stabilisierende Komponenten, die ein oder mehrere härtbare(s), wasserlösliche(s) oder in Wasser dispergierbare(s) oder quellbare(s) natürliche(s) Polymer(e) oder ein oder mehrere davon abgeleitete(s) Derivat(e) umfassen, enthaltenden granulierten, gepreßten oder pelletierten Kern oder alternativ aus einem Kern aus einer oder mehreren Trestersorten in zerkleinerter Form und einer den Tresterkern umgebenden Umhüllung aus einem oder mehreren härtbaren, wasserlöslichen oder in Wasser dispergierbaren oder quellbaren natürlichen Polymer oder einem oder mehreren davon abgeleiteten Derivat(en) besteht.

Die Erfindung betrifft auch die Verwendung des in partikulärer Form vorliegenden Materials gemäß einer oder mehrerer der genannten Ausführungsformen als Düngermaterial und/oder Bodenverbesserer. Gemäß einer weiteren bevorzugten Ausführungsform betrifft die Erfindung die Verwendung des verkapselten Holzgranulats oder des verkapselten oder unverkapselten Trestergranulats als Düngermaterial und/oder Bodenverbesserer.

Der Kern eines erfindungsgemäß bevorzugten verkapselten Holzgranulats besteht aus einer oder mehreren Holzsorten in zerkleinerter Form. Bevorzugt ist die Ausführungsform der Erfindung, worin der Kern aus Holz zweier unterschiedlicher Sorten besteht. Diese können, in einer weiter bevorzugten Ausführungsform, im Fall der einen Holzsorte ein Splintholz und im Fall der anderen Holzsorte ein Kernholz sein. Diese Ausführungsform ist deswegen bevorzugt, weil sich damit im Kern eine harte und eine weiche Holzsorte nebeneinander befinden. Diese werden bei der Verwendung des verkapselten Holzgranulats als Düngermaterial oder Bodenverbesserer mit unterschiedlicher Geschwindigkeit abgebaut und weisen außerdem ein unterschiedliches Wasserspeichervermögen auf.

Besonders bevorzugte Kernhölzer für den Kern des verkapselten Holzgranulats gemäß dieser bevorzugten Ausführungsform der Erfindung sind beispielsweise Hölzer von Laubbäumen wie Ulmen-, Buchen-, Ahorn-, Erlen- und/oder Birkenholz. Als Kernholz kann jeweils eines oder können mehrere der genannten Hölzer verwendet werden.

Besondere Beispiele für Splinthölzer, die für den Kern des erfindungsgemäßen verkapselten Holzgranulats verwendet werden, sind Hölzer von Nadelbäumen wie beispielsweise Fichten-, Lärchen-, Kiefern- und/oder Tannenholz. Im Kern des verkapselten Holzgranulats kann eines oder können mehrere der genannten Splinthölzer Verwendung finden.

Die einzelnen Splintholz- bzw. Kernholzarten sind jedoch nicht auf die genannten Hölzer beschränkt; es können alle denkbaren, hierfür geeigneten Hölzer verwendet werden. Die genannten Hölzer stellen jedoch aufgrund ihrer guten Zugänglichkeit bzw. ihrer Eigenschaften bei der späteren Verwendung des verkapselten Holzgranulats gemäß der bevorzugten Ausführungsform der Erfindung eine besonders bevorzugte Ausführungsform dar.

Die genannten Holzsorten werden in dem Kern des verkapselten Holzgranulats in zerkleinerter Form verwendet. Dies bedeutet beispielsweise, daß das jeweilige Holz auf einen Partikeldurchmesser zerkleinert wird, der im wesentlichen im Bereich von 1,5 bis 4,0 mm, besonders bevorzugt im Bereich von 2,0 bis 3,0 mm, liegt. Die Größe der Holzpartikel ist jedoch an sich nicht kritisch. Sie sollte jedoch einen bestimmten oberen Wert nicht überschreiten, um das verkapselte Holzgranulat gemäß dieser bevorzugten Ausführungsform der Erfindung in einer für die Handhabung geeigneten Teilchengröße zu halten.

Gemäß verschiedenen weiter bevorzugten Ausführungsformen ist es möglich, dem Kern des erfindungsgemäßen verkapselten Holzgranulats einen oder mehrere Zusätze beizumischen. Dies wird nachfolgend im einzelnen erläutert und hat den Vorteil, daß man das verkapselte Holzgranulat für die spätere Verwendung als Düngermaterial oder Bodenverbesserer spezifischen Erfordernissen, beispielsweise Mängeln in der chemischen Zusammensetzung des Bodens, in dem pH-Wert des Bodens oder in der physikalischen Beschaffenheit des Bodens, anpassen kann.

So entspricht es einer weiter bevorzugten Ausführungsform, daß der Kern des erfindungsgemäßen verkapselten Holzgranulats zusätzlich einen oder mehrere Mineralstoffe enthält. Dies kann dazu dienen, daß Mineraliendefizite des Bodens leicht ausgeglichen und damit die erforderlichen Mineralien für das spätere Pflanzenwachstum bereitgestellt werden können. Darüberhinaus kann auf diesem Wege der pH-Wert des Bodens beeinflußt werden. Dies spielt beispielsweise dann eine Rolle, wenn der Boden aufgrund der Umweltbedingungen oder aufgrund intensiver früherer Nutzung zu sauer geworden ist. Kenntnisse über die dem Boden notwendigerweise zuzuführenden Mineralstoffe gewinnt man im praktischen Bereich am einfachsten dadurch, daß man einen Bodenanalyse vornimmt und ermittelt, welche Mineralstoffe zur Anreicherung sinnvollerweise verwendet werden.

In einer besonders bevorzugten Ausführungsform des verkapselten Holzgranulats enthält der Kern einen odere mehrere Mineralstoffe in Form wasserlöslicher Salze, bevorzugt in Form von Carbonaten, Sulfaten, Citraten und/oder Acetaten. In gleicher Weise ist es jedoch auch möglich, daß der Kern des verkapselten Holzgranulats einen oder mehrere Mineralstoffe in Form wasserlöslicher, d. h. durch Umsetzung mit Wasser in Gegenwart weiterer Bodenbestandteile (z. B. Säuren) in für Pflanzen aufnehmbare Form vorliegender Oxide enthält. Geeignet sind auch basische Oxide und Aquoxide. Mit Vorteil sind die wasserlöslichen Salze und/oder Oxide Verbindungen der Alkali- und/oder Erdalkalimetalle. Besonders bevorzugt werden hierbei Erdalkalimetalle. Besondere Beispiele für Erdalkalimetalle sind Calcium- und/oder Magnesium. Es kommen jedoch auch Salze anderer Metalle in Frage. Dem Kern des verkapselten Holzgranulats kann einer oder können mehrere der genannten Mineralstoffe zugesetzt werden. Dies kann mit Vorteil dann geschehen, wenn die Böden übersäuert sind und darüberhinaus für die spätere Bepflanzung (Chlorophyllbildung) Magnesium benötigen.

Eine weitere bevorzute Ausführungsform der Erfindung, die allerdings nicht zwingend erforderlich ist, kann darin bestehen, daß der Kern des verkapselten Holzgranulats zusätzlich Mikroorganismen enthält. Für diese Ausführungsform kommen besonders Bakterien und insbesondere diejenigen Bakterienspezies in Frage, die im Boden natürlicherweise auch vorhanden sind und in der Humusbildung wirken können, aber in speziellen Fällen aufgrund der Umweltbedingungen im Boden nicht (mehr) zu finden sind. Mit Vorteil enthält der Kern des erfindungsgemäßen verkapselten Holzgranulats Bakterien der Gattung Bacillus und insbesondere Bakterien der Spezies Bacillus subtilis und/oder Bacillus megatherium. Der besondere Vorteil dieser Ausführungsform besteht darin, daß die Holzbestandteile des Kerns des verkapselten Holzgranulats durch die zugesetzten Mirkoorganismen zersetzt werden, wodurch die Bodenaktivität erhöht und die Bodenkrume gelockert wird. Dies geschieht auch dann, wenn der Boden selbst keine Mikroorganismen (mehr) enthält. Ein weitere Vorteil dieser Ausführungsform ist darin zu sehen, daß die Bakterien der Gattung Bacillus Sporen bilden können und diese Sporen als Dauerformen die bakterielle Aktivität, d. h. beispielsweise den Abbau der Holzbestandteile im Kern des verkapselten Holzgranulats, nicht sofort starten. Dies geschieht erst dann, wenn optimale Bedingungen herrschen. Optimale Bedingungen sind jedoch erst dann gegeben, wenn das erfindungsgemäße verkapselte Holzgranulat im Boden durch Feuchtigkeit angegriffen wird.

Zur Verbesserung der bakteriellen Aktivität kann der Kern des verkapselten Holzgranulats gemäß der Erfindung zusätzlich organische Stickstoffträger enthalten. Diese dienen den Mikroorganismen als Stickstoff-Quelle und können eine oder mehrere Komponenten aus der Gruppe Grünmehl, getrocknete Kartoffelschlempe, Maiskleber, getrocknetes Blutmehl, Fischmehl, getrockneter Fischpreßsaft, Fleischfuttermehl, Futterknochenschrot, Knochenmehl, Hornmehl, Tiermehl und Seealgenmehl sein.

Das Problem vieler Landwirte oder Gärtner bei der Verbesserung der Struktur und auch der Inhaltsstoffe des Bodens besteht darin, geeignete Stickstoffträger bereitzustellen, die dem Boden Stickstoff in einer für die Bodenflora und -fauna geeigneten Form zur Verfügung stellen können. Andererseits werden von der Industrie, beispielsweise von der Obst, Citrusfrüchte, Wein, Bier, Zucker und Grünkräuter verarbeitenden Industrie, in großen Mengen Materialien wie Obstschlempe, Obsttrester, Citrustrester, Weintrester, Biertrester, Brennesselmehl, Wildkräutermehl und Melasse, aber auch andere, in großen Mengen anfallende "Abfall"-Stoffe zur Verfügung gestellt, die sich durch einen relativ hohen Stickstoffgehalt auszeichnen. Außerdem enthalten diese Stoffe relativ hohe Pektinmengen, die der Verbesserung der Bodenstruktur dienen können und beispielsweise dafür nützlich sind, die Feuchtigkeit im Boden zu halten, ohne daß es zu Staunässe kommt.

Erfindungsgemäß kann also der Kern des bevorzugten verkapselten Holzgranulats mit einem oder mehreren organischen Stickstoffträger(n) aus der Gruppe Obstschlempe, Obsttrester, Citrustrester, Weintrester, Biertrester, Brennesselmehl, Wildkräutermehl und Melasse beaufschlagt sein. Aus der genannten Gruppe kann eine oder können mehrere Substanzen in Mischung miteinander verwendet werden. Diese Substanzen werden von der Industrie in großen Mengen produziert und üblicherweise einer Deponierung oder der Viehverfütterung zugeführt. Mit der erfindungsgemäßen Verwendung im Kern des verkapselten Holzgranulats können die genannten Substanzen, die äußerst preiswert erhältlich sind und in einfacher Weise (durch Trocknen, Mahlen etc.) aufbereitet werden können, der Wiederverwendung bei der Bodenaufbereitung zugeführt werden. Insbesondere läßt sich mit diesen Substanzen der Stickstoffgehalt des Bodens in vorteilhafter Weise erhöhen. Es wird den Pflanzen eine Form des Stickstoffs bereitgestellt, die leicht aufgenommen wird und damit in vorteilhafter Weise zum Nährstoffhaushalt des Ökosystems beiträgt.

Es entspricht einer besonders bevorzugten Ausführungsform der vorliegenden Erfindung, daß der Kern mit einem oder mehreren organischen Stickstoffträger(n) aus der Gruppe Obsttrester und Weintrester beaufschlagt ist, da diese bereits in einer Form anfallen, die die sofortige Verarbeitung gestattet und außerdem von ihren Inhaltsstoffen her am ehesten für eine Bodenverbesserung geeignet sind.

Gemäß einer weiteren bevorzugten Ausführungsform enthält der Kern des verkapselten Holzgranulats gemäß der bevorzugten Ausführungsform der Erfindung noch zusätzliche Stoffe, die der Verbesserung des Bodens dienen können. Solche Stoffe können beispielsweise Stoffe sein, die die Feuchtigkeit im Boden halten, ohne daß es zu Staunässe kommt. Derartige Stoffe sind beipielsweise Alginate, Pektine, Ethylcellulose und Tonerden wie beispielsweise Montmorillonite oder Bentonite, jedoch auch Holzmehl, Sägespäne, Thomasmehl, Braunkohleasche, Steinkohleasche, Urgesteinsmehl und Seetangmehl. Der Vorteil eines Zusatzes der genannten Substanzen liegt darin, daß die physikalische Beschaffenheit des Bodens deutlich verbessert wird. Der Boden nimmt nach Zusatz derartiger Stoffe eine verbesserte Krümelung an. Die Lockerung der Krume führt zu einer höheren Gasdurchlässigkeit und erhöht außerdem das Wasserbindevermögen des Bodens, ohne daß es zu Staunässe kommt.

Aufgrund besonderer Bedingungen, beispielsweise einer starken gartenwirtschaftlichen Nutzung oder besonderer Umweltbedingungen (z. B. pH-Wert), kann der Boden auch an Spurenelementen verarmt sein. Es entspricht deswegen einer weiteren bevorzugten Ausführungsform der Erfindung, dem verkapselten Holzgranulat im Kern Spurenelemente zuzusetzen. Diese entstammen - je nach den Bedürfnissen - der Gruppe wasserlösliche Stickstoffverbindungen, wasserlösliche Phosphate, wasserlösliche Sulfate, wasserlösliche Borverbindungen, Mangan, Kupfer, Cobalt und Zink. Besondere Erfordernisse können auch den Zusatz anderer Spurenelemente wünschenswert machen.

Darüberhinaus kann der Kern möglicherweise auch andere Bestandteile wie Makroelemente (K, phosphorhaltige Verbindungen, stickstoffhaltige Verbindungen, schwefelhaltige Verbindungen) und Spurenelemente (Bor, Kupfer, Eisen, Mangan, Fluor, Zink, Jod, Molybdän, Cobalt, Nickel und/oder Seien) enthalten. Einzelne oder mehrere diese Elemente sollen der Komplettierung der mineralischen Erfordernisse des Bodens dienen und folgen den praktischen Erkenntnissen der Notwendigkeit eines ausgeglichenen Mineralienhaushalts des jeweiligen speziellen Bodens.

Zu weiteren Stickstoffträgern, die einzeln oder zusammen mit den oben bereits genannten Substanzen dem erfindungsgemäßen Holzgranulat im Kern zugesetzt werden können, gehören in einer weiteren bevorzugten Ausführungsform des verkapselten Holzgranulats Molkepulver und Harnstoff. Insbesondere bei Böden, die stark an pflanzenbiologisch geeignetem Stickstoff verarmt sind, kann sich der Zusatz von Harnstoff zum Kern des erfindungsgemäßen Holzgranulats als ausgesprochen vorteilhaft erweisen.

Es entspricht einer weiteren vorteilhaften und damit besonders bevorzugten Ausführungsform der Erfindung, daß dem Kern teilweise an Stelle von den oder zusätzlich zu den bereits genannten Substanzen Vitamine, Aminosäuren und/oder Hefen zugesetzt werden. Geeignete Vitamine für diesen Zweck sind Vitamin A und/oder seine Salze, beispielsweise Vitamin A-Palmitat oder Vitamin A-Acetat, oder Vorläufer des Vitamins A, wie beispielsweise beta-Carotin, Vitamin B1, Vitamin B2, Nicotinsäureamid (Vitamin B3), Vitamin B6, Vitamin B12, Vitamin C, Vitamin D3, Calciumpantothenat, Vitamin E und/oder seine Ester wie beispielsweise Vitamin E-Acetat, Vitamin K3, Rutin ("Vitamin P") oder auch andere Vitamine und/oder deren Vorläufer. Besonders bevorzugt werden Vitamine aus der B-Gruppe und ein ausgewogener, d. h. die genannten Vitamine in adequaten Wirkstoffmengen enthaltender Gesamt-Vitamin-Komplex.

Als Aminosäuren kommen insbesondere p-Aminobenzoesäure, dem als Wirkstoff für das Bakterienwachstum besondere Bedeutung zukommt, Carnitin, Methionin, Tryptophan, Cystein, Glutaminsäure und Asparaginsäure in Frage. Besonders bevorzugt aus der Gruppe der Aminosäuren sind die proteinogenen Aminosäuren. Weitere vorteilhafte Zusätze sind Allantoin, Casein und seine Abbauprodukte, Chlorophyll, Peptone und ihre Abbauprodukte, Cholin und Orotsäure.

Die dem Kern zusetzbaren Hefen können solche Substanzen sein, die bei der Bier- und/oder Weinherstellung anfallen und sich nach dem Gärungsvorgang am Boden des Gärgefäßes absetzen und nach Abziehen des Biers bzw. Weins gewonnen werden können. Diese Substanzen sind sehr nährstoffhaltig, insbesondere stickstoffhaltig und sind für die beispielsweise als Bodenverbesserer geeigneten erfindungsgemäßen verkapselten Holzgranulate als Zusatz besonders bevorzugt. Es sind jedoch in gleicher Weise auch Hefen aus anderen industriellen Fermentationsprozessen verwendbar. Solche Hefen werden teilweise auch als "Futterhefe" für Fütterungszwecke auf dem Markt angeboten.

Die Herstellung des Kerns des erfindungsgemäßen verkapselten Holzgranulats erfolgt in an sich aus dem Stand der Technik bekannter Weise. Im einfachsten Fall wird das Gemisch aus mehreren Holzsorten in einem Mischer hergestellt. Sofern vorgesehen, können dieser Mischung die Mineralstoffe und auch die weiteren oben genannten Bestandteile im Verfahren der Herstellung des Kerns des Holzgranulats beigemengt werden.

Sollen dem Kern des erfindungsgemäßen verkapselten Holzgranulats Bakterien zugesetzt werden, so geschieht das in der Weise, daß man dem Gemisch aus Holzgranulat und Mineralstoffen beispielsweise eine Zubereitung gefriergetrockneter Bakterien zusetzt. Es ist jedoch auch denkbar, die Bakterien als Sporen in Form einer nassen Aufschlämmung oder Suspension zuzusetzen, wie sie direkt einem dafür geeigneten Fermenter entnommen werden. Der Vorteil der letzteren Ausführungsform besteht darin, daß die Wasserbestandteile der Bakteriensuspension bei dieser Herstellungsweise vom Holz aufgesogen werden können und damit schon ein erster Schritt zum Abbau des Splintholzbestandteils des Kerns in die Wege geleitet werden kann. Die eingearbeiteten Bakteriensporen keimen aus und beginnen mit den Abbau der Holzbestandteile erst bei Vorliegen optimaler Bedingungen, d. h. einer ausreichenden Feuchtigkeit und für den Abbau hinreichenden Temperaturen. Die Stickstoffträger dienen den Bakterien dann als Stickstoffquelle, während die Spurenelemente und Mineralstoffe den Mineralbedarf der Mikroorganismen decken.

Erfindungsgemäß ist der oben beschriebene Kern des verkapselten Holzgranulats mit einer Umhüllung aus einem härtbaren, wasserlöslichen oder in Wasser quellbaren Polymer versehen. Diese harte Polymerhülle schirmt nicht nur den Kern gegen die Umgebung ab und verhindert dadurch, daß Feuchtigkeit zutreten kann, sondern hält auch die Kernbestandteile praktisch zusammen. Die Handhabung des verkapselten Holzgranulats wird dadurch überhaupt erst möglich. Die Lagerfähigkeit wird durch die harte Polymerhülle wesentlich verbessert, und es läßt sich ein auch nach längerer Lagerzeit schüttbares Granulat bereitstellen, dessen Herstellung und Handhabung nicht mit der Bildung gesundheitsgefährdender Stäube verbunden ist. Statt der Polymere oder zusammen mit diesen können auch ihre Derivate, beispielsweise in an sich bekannter Weise chemisch modifizierte Derivate, verwendet werden.

In einer weiter bevorzugten Ausführungsform der Erfindung besteht die Umhüllung des Kerns aus einem Protein wie Gelatine, Keratin und/oder Weizenkleber bzw. Prolamin, wobei Gelatine besonders bevorzugt ist. Die Dicke der Gelatineschicht ist nicht kritisch. Besonders bevorzugt ist jedoch, daß die Proteinschicht, beispielsweise die Gelatineschicht, den Kern des verkapselten Holzgranulats vollständig umhüllt.

In einer weiteren, ebenfalls bevorzugten Ausführungsform der Erfindung wird die Proteinschicht, beispielsweise die Gelatineschicht, unabhängig von den oben genannten Bestandteilen des Kerns, mit Bakteriensporen angeimpft oder mit einer Bakteriensuspension versetzt. Damit lassen sich vorteilhaft auch mit der Umhüllung des verkapselten Holzgranulats Mikroorganismen in den Boden einbringen.

Die Aufbringung der Proteinhüllung, bevorzugt der Gelatineumhüllung erfolgt in an sich aus dem Stand der Technik bekannter Weise. So kann man die Mischung aus Holzbestandteilen, gegebenenfalls mit zugesetzten Mineralstoffen und/oder Spurenelementen sowie gegebenenfalls nach Animpfung mit Bakteriensporen oder Zusatz einer Bakteriensuspension, in einen Mischer einbringen und die Mischung dann mit einer Proteinlösung, bevorzugt mit einer Gelatinlösung, besprühen. Dies geschieht bei erhöhter Temperatur, aus praktischen Gründen bevorzugt bei Temperaturen zwischen 50 und 70 °C. Bei niedrigeren Temperaturen lassen sich Proteinlösungen, bevorzugt Gelatinelösungen, in der erforderlichen Konzentration nicht sprühfähig halten. Besonders bevorzugte Temperaturbereiche liegen zwischen 50 und 60 °C. Die Temperaturbereiche sind jedoch nicht kritisch. Es ist in diesem Zusammenhang zu berücksichtigen, daß bei höheren Temperaturen als 85 bis 90 °C die in der Lösung vorhandenen vegetativen Bakterienzellen abgetötet werden und nur die Sporen übrigbleiben. Diese sind jedoch bis weit über 100 °C stabil.

Es entspricht einer weiteren, im vorliegenden Fall besonders bevorzugten Ausführungsform, das Protein der Umhüllung ganz oder teilweise durch ein anderes natürliches Polymer wie beispielsweise ein Polysaccharid zu ersetzen. Bevorzugte Polysaccharide sind erfindungsgemäß Chitin, Alginate oder Agar-Agar. Chitin, Alginate und Agar-Agar fallen als Industrieprodukte in großen Mengen und relativ preiswert an. Sie können relativ leicht in wässrigen Medien gelöst oder suspendiert werden und eignen sich auch von daher optimal zur Ausbildung der Umhüllung des verkapselten Holzgranulats gemäß der Erfindung. Darüberhinaus bilden sie dann, wenn sie nach Trocknung in fester Form vorliegen, eine auch mechanischen Belastungen in optimaler Weise standhaltende Umhüllung. Der Anteil an einem oder mehreren Polysacchariden, insbesondere der genannten Gruppe, mit besonderem Vorteil Chitin, in der Umhüllung kann bei 5 bis 30 % des festen Umhüllungsmaterials liegen, in bevorzugter Weise zwischen 10 und 15 %.

Es entspricht einer weiteren, ebenfalls bevorzugten Ausführungsform der Erfindung, daß man den Kern und/oder die Umhüllung des Holzgranulats mit Pilzmycel beaufschlagt. Diese Ausführungsform ist deswegen bevorzugt, weil man auf diesem Wege Pilze mit dem Holzgranulat in den Boden einbringen und damit für eine Verbesserung der Bodenflora Sorge tragen kann. Mit Vorteil verwendet man für diesen Zweck Penicillium-Stämme wie beispielsweise Penicillium chrysogenum, dessen Eigenschaften und Stoffwechsel man sich damit für die Verbesserung der Bodenqualität nutzbar macht.

Nach Aufbringen der Polymerumhüllung, beispielsweise der Protein- und/oder Polysaccharidumhüllung, auf dem oben beschriebenen Wege erhält man ein hartes Düngermaterial. Besonderer Vorteil des so entstandenen Düngers bzw. Bodenverbesserers ist, daß keine Stäube, insbesondere Holzstäube auftreten können. Im Stand der Technik waren diese im Herstellungsprozeß sehr häufig hinderlich und erforderten besondere Sicherheits- und Gesundheitsvorkehrungen für die beteiligten Arbeitskräfte. Dies ist jedoch nicht nur ein für die Hersteller wichtiger Aspekt, sondern betrifft auch den Anwender. Auch nach längerer Lager- bzw. Transportzeit braucht beim Anwender nicht mit dem Auftreten von Staubanteilen in dem anwendungsbereiten Dünger- bwz. Bodenverbesserermaterial gerechnet zu werden.

Erfindungsgemäß ist es besonders bevorzugt, das verkapselte Holzgranulat als Düngermaterial oder Bodenverbesserer zu verwenden. Dieses weist gegenüber aus dem Stand der Technik bekannten Materialien mehrere gewichtige Vorteile auf. So wird der im Kern enthaltene Splintholzanteil nach Einbringung des Materials in den Boden unter entsprechend geeigneten Bodenbedingungen sofort durch Bakterien und Pilze abgebaut. Dies kann unter optimalen Bedingungen bereits innerhalb weniger Wochen geschehen und kann dadurch beschleunigt werden, daß man - wie oben bereits als bevorzugte Ausführungsform beschrieben - dem Kern des erfindungsgemäßen verkapselten Holzgranulats Bakterien zusetzt. Die für den Abbau erforderlichen Bakterien stehen dabei nicht nur sofort für den Abbau des Splintholzanteils des Kerns bereit, sondern vermehren sich auch unter günstigen Bedingungen in der Weise, daß sie in die Umgebung des Düngermittelteilchens übertragen werden und so zu einer qualitativen Verbesserung des Bodens in diesem Bereich führen. Die Verbesserung der Bodenqualität reicht also über die Zeit hinaus, in der der Splintholzanteil des Kerns bis zum vollständigen Verschwinden abgebaut wird.

Der im Kern enthaltene Kernholzanteil ist gegen bakteriellen Abbau wesentlich beständiger. Er dient damit in der ersten Phase der Bodenauflockerung. Diese ist vorteilhaft hinsichtlich des Gasaustausches einerseits und des Wasserhaushalts des Bodens andererseits. Kernholz wird im Regelfall nur durch Pilze abgebaut. Dieser Abbau dauert wesentlich länger und kann bei harten Kernhölzern ein Jahr und länger dauern. Die Dauer der Abbauzeit ist jedoch von der besonderen Holzart abhängig und damit auch über diese zu steuern.

Bei besonderen Bodengegebenheiten, beispielsweise Mangelerscheinungen im Bereich bestimmter Mineralien und Spurenelemente, kann den Erfordernissen durch die Zusammensetzung des Mineralien- bzw. Spurenelemente-Bestandteils des Kern Rechnung getragen werden. Besonders Spurenelemente können im Einzelfall eine wichtige Rolle spielen.

Darüber hinaus ist für eine gesunde Bodenbeschaffenheit der pH-Wert von großer Bedeutung. Saure Böden können durch das erfindungsgemäße verkapselte Holzgranulat insofern verbessert werden, als ihre Pufferkapazität durch bestimmte Salzbestandteile des Kerns des verkapselten Holzgranulats verbessert werden kann. So können die Mineralstoffe in Form von Salzen zugegeben werden, deren Anionen eine relativ hohe Pufferkapazität aufweisen. Derartige Anionen sind beispielsweise das Citrat- und das Acetation.

Die Umhüllung des Kerns des erfindungsgemäßen verkapselten Holzgranulats mit einem natürlichen Polymer, bevorzugt mit einem Protein wie beispielsweise Gelatine oder einem Polysaccharid wie Chitin, hat den Vorteil, daß nicht nur ein gut in Wasser quellbarer Stickstoff-Träger zugegen ist, sondern auch einzelne Granulatkörner erhalten werden, was zu einer guten Lagerfähigkeit und Handhabbarkeit des Materials führt. Das erfindungsgemäße verkapselte Holzgranulat mit Polymerumhüllung wie beispielsweise einer Gelatine- und/oder Chitinumhüllung fließt frei, läßt sich gut abpacken und ist darüberhinaus auch ohne Aufnahme von Feuchtigkeit oder Verlust der freien Fließbarkeit über längere Zeit lagerstabil.

Ein weiterer Vorteil des erfindungsgemäßen verkapselten Holzgranulats in der Ausführungsform, in der der Kern neben Holzanteilen, Mineralstoffen und gegebenenfalls Mikroorganismen auch noch Alginate, Pektine sowie Tonmaterialien enthält, liegt darin, daß Alginate, Pektine und die Tonmaterialien, insbesondere Bentonite und Montmorillonite, in weitem Umfang die Wasseraufnahmefähigkeit und Quellbarkeit des Düngermaterials beeinflussen und damit auch die Fähigkeit des Bodens zum positiven hin verändern, aufgenommenes Wasser zu halten. Dies ist besonders dann erforderlich, wenn das Wasserrückhaltevermögen des Bodens aufgrund der speziellen Zusammensetzung schlecht ausgeprägt ist. Diese Erscheinung betrifft beispielsweise Sandböden. Wie bei Verwendung des erfindungsgemäßen verkapselten Holzgranulats als Düngermaterial bzw. als Bodenverbesserer gefunden wurde, konnte auch Erdreich mit einem sehr hohen Kleieanteil innerhalb relativ kurzer Zeit sichtlich aufgelockert und die Drainierung eines solchen Bodens sichtbar verbessert werden.

Darüberhinaus ist es bekanntermaßen von besonderer Bedeutung für das Edaphon und die Melioration sowie für die Wurzel- und Blattbildung, daß der Boden ausreichend Spurenelemente, Vitamine und Aminosäuren zur Aufnahme durch die Pflanze enthält. Diese werden mit den bevorzugten verkapselten Holzgranulaten in gezielter Weise bereitgestellt.

Darüberhinaus wird mit einer Förderung der Mikroorganismen-Tätigkeit dafür Sorge getragen, daß sich relativ schnell neuer Humus bildet, der alle für das Wachstum der Pflanzen wichtigen Komponenten enthält. Insbesondere wird auf eine verstärkte Versorgung mit Stickstoff über spezielle Stickstofftrager eine zusätzliche Düngung mit mineralischen Stickstoffträgern vermieden, ohne daß ein Auswaschen des organischen Stickstoffträgers in das Grundwasser befürchtet werden muß.

In einer weiteren bevorzugten Ausführungsform betrifft die Erfindung ein Trestergranulat, das aus einem eine oder mehrere Trestersorte(n) in zerkleinerter Form und stabilisierende Komponenten, die ein oder mehrere härtbare(s), wasserlösliche(s) oder in Wasser dispergierbare(s) oder quellbare(s) natürliche(s) Polymer(e) oder ein oder mehrere davon abgeleitete(s) Derivat(e) umfassen, enthaltenden granulierten, gepreßten oder pelletierten Kern besteht.

Die Erfindung betrifft in einer weiteren bevorzugten Ausführungsform ein verkapseltes Trestergranulat, das aus einem Kern aus einer oder mehreren Trestersorten in zerkleinerter Form und einer den Tresterkern umgebenden Umhüllung aus einem oder mehreren härtbaren, wasserlöslichen oder in Wasser dispergierbaren oder quellbaren natürlichen Polymer(en) oder einem oder mehreren davon abgeleiteten Derivat(en) besteht.

Der Kern des erfindungsgemäßen Trestergranulats besteht aus einer oder mehreren Trestersorten in zerkleinerter Form. Bevorzugt ist die Ausführungsform der Erfindung, worin der Kern aus einer oder mehreren Trestersorten aus der Gruppe Obsttrester, Citrustrester, Weintrester und Biertrester besteht. Wie bereits oben angegeben, entstehen derartige Trester bei der industriellen Verarbeitung von Obst bzw. Citrusfrüchten in großen Mengen dann, wenn aus den genannten Früchten der Saft abgepreßt wird. Weintrester oder Biertrester entstehen beim Abpressen von Weintrauben bzw. bei der Würzezubereitung aus Malzschrot. Die genannten Trestersorten fallen dabei bereits in mehr oder weniger trockener Form an. Der Feuchtigkeitsgehalt liegt im Regelfall im Bereich von 50 bis 75 Gew.-%. Eine Trocknung der Rohtrester vor ihrer Verwendung in dem Kern des erfindungsgemäßen Trestergranulats ist jedoch nicht erforderlich, wie nachfolgend im einzelnen ausgeführt wird.

Besonders bevorzugt zur Verwendung im Kern des erfindungsgemäßen Trestergranulats sind Obsttrester und Biertrester.

Alle genannten Trestersorten können entweder einzeln oder in beliebigen Mischungen miteinander verwendet werden. Beispielhafte Mischungen von Trestern für den Kern des erfindungsgemäßen Trestergranulats umfassen 10 % Obsttrester und 15 % Citrustrester, 5 % Citrustrester und 20 % Obsttrester oder 20 % Biertrester und 10 % Obsttrester. Die genannten Angaben sind Angaben in Gew.-% und beziehen sich auf das Gesamtgewicht des Kerns des erfindungsgemäßen Trestergranulats.

Die Gesamtmenge an einem Trester bzw. mehreren Trestern, bezogen auf das Gesamtgewicht des Kerns, kann bevorzugt bei 5 bis 50 Gew.-%, besonders bevorzugt bei 10 bis 35 Gew.-% und mit ganz besonderem Vorteil bei 15 bis 30 Gew.-% liegen. Gerade diese Gewichtsmengen sorgen für eine ausgewogene Zufuhr organischer Komponenten, insbesondere organischer Stickstoffverbindungen, in den Boden und führen darüberhinaus auch zu einer lockeren Beschaffenheit des Bodens, wie sie Voraussetzung für eine Regeneration und Einstellung optimaler Bedingungen im Boden ist.

Gemäß einer weiteren Ausführungsform der Erfindung ist es möglich, den Trester im Kern wenigstens teilweise durch Obstschlempe zu ersetzen. Dies kann beispielsweise dann vorteilhaft sein, wenn weitere Bestandteile im Kern vorhanden sind, die die Aufnahme einer großen Flüssigkeitsmenge gestatten. Beispiele hierfür sind Tonerden wie Bentonite und/oder Montmorillonite oder auch Holzbestandteile wie Holzgranulat, Sägespäne oder Holzmehl usw., auf die nachfolgend noch eingegangen wird. Die Obstschlempe-Mengen können in diesem Fall beispielsweise bei 5 bis 20 Gew.-% liegen, bezogen auf das Gesamtgewicht des Kerns des erfindungsgemäßen Trestergranulats.

Bevorzugt liegt der Feuchtegehalt des Kerns des erfindungsgemäßen Trestergranulats bei maximal 18 Gew.-%, beispielsweise bei 4 bis 18 Gew.-%, noch mehr bevorzugt bei 8 bis 14 Gew.-%. Ausgehend von der Tatsache, daß die Feuchtigkeit weitgehend aus dem Tresteranteil bzw. der Schlempe stammt, werden - wie nachfolgend im Detail beschrieben wird - dem Kern bevorzugterweise Trockenkomponenten zugesetzt, die die Feuchtigkeit aufnehmen können. Dadurch läßt sich ein aufwendiger und das Herstellungsverfahren verteuernder Trockenschritt normalerweise ausschließen. Es ist jedoch auch möglich, trockene Trester allein im Kern einzusetzen; diese können - sofern erwünscht - auf einen für die Herstellung der Trestergranulate geeigneten Feuchtigkeitsgehalt des Kern im oben genannten Bereich eingestellt werden.

Bevorzugt ist eine weitere Ausführungsform der Erfindung, worin der Kern zusätzlich zu dem Trester/den Trestern eine oder mehrere Holzsorten umfaßt. Diese können, in einer weiter bevorzugten Ausführungsform, im Fall einer Holzsorte ein Splintholz und im Fall der anderen Holzsorte ein Kernholz sein. Diese Ausführungsform ist deswegen bevorzugt, weil sich damit im Kern neben den Trestern eine harte und eine weiche Holzsorte nebeneinander befinden. Diese werden bei der Verwendung des Trestergranulats als Düngermaterial oder Bodenverbesserer mit unterschiedlicher Geschwindigkeit abgebaut und weisen außerdem ein unterschiedliches Wasserspeichervermögen auf.

Besonders bevorzugte Kernhölzer für den Kern des Trestergranulats gemäß der Erfindung sind beispielsweise Hölzer von Laubbäumen wie Ulmen-, Buchen-, Ahorn-, Erlen- und/oder Birkenholz. Als Kernholz kann jeweils eines oder können mehrere der genannten Hölzer verwendet werden.

Besondere Beispiele für Splinthölzer, die für den Kern des erfindungsgemäßen Trestergranulats verwendet werden, sind Hölzer von Nadelbäumen wie beispielsweise Fichten-, Lärchen-, Kiefern- und/oder Tannenholz. Im Kern des Trestergranulats kann eines oder können mehrere der genannten Splinthölzer Verwendung finden.

Die einzelnen Splintholz- bzw. Kernholzarten sind jedoch nicht auf die genannten Hölzer beschränkt; es können alle denkbaren, hierfür geeigneten Hölzer verwendet werden. Die genannten Hölzer stellen jedoch aufgrund ihrer guten Zugänglichkeit bzw. ihrer Eigenschaften bei der späteren Verwendung des Trestergranulats gemäß der Erfindung eine besonders bevorzugte Ausführungsform dar.

Die genannten Holzsorten werden in dem Kern des Trestergranulats in zerkleinerter Form verwendet. Dies bedeutet beispielsweise, daß das jeweilige Holz auf einen Partikeldurchmesser zerkleinert wird, der im wesentlichen im Bereich von 1,5 bis 4,0 mm, besonders bevorzugt im Bereich von 2,0 bis 3,0 mm, liegt. Die Größe der Holzpartikel ist jedoch an sich nicht kritisch. Sie sollte jedoch einen bestimmten oberen Wert nicht überschreiten, um das Trestergranulat gemäß der Erfindung in einer für die Handhabung geeigneten Teilchengröße zu halten.

Besonders bevorzugt beträgt der Holzanteil im Kern des erfindungsgemäßen Trestergranulats bis zu 30 Gew.-%, bevorzugt 5 bis 25 Gew.-%, besonders bevorzugt 10 bis 20 Gew.-%, wobei die Holzmenge als solche nicht kritisch ist und in Abhängigkeit von dem Erfordernis, eine mechanisch gut gelockerte Bodenkrume zu erhalten, in weiten Grenzen gewählt werden kann.

Gemäß verschiedenen bevorzugten Ausführungsformen ist es möglich, dem Kern des erfindungsgemäßen Trestergranulats einen oder mehrere weitere Zusätze beizumischen. Dies wird nachfolgend im einzelnen erläutert und hat den Vorteil, daß man das verkapselte oder unverkapselte Trestergranulat für die spätere Verwendung als Düngermaterial oder Bodenverbesserer spezifischen Erfordernissen, beispielsweise Mängeln in der chemischen Zusammensetzung des Bodens, in dem pH-Wert des Bodens oder in der physikalischen Beschaffenheit des Bodens, anpassen kann.

So entspricht es einer bevorzugten Ausführungsform, daß der Kern des erfindungsgemäßen Trestergranulats zusätzlich einen oder mehrere Mineralstoffe enthält. Dies kann dazu dienen, daß Mineraliendefizite des Bodens leicht ausgeglichen und damit die erforderlichen Mineralien für das spätere Pflanzenwachstum bereitgestellt werden können. Darüberhinaus kann auf diesem Wege der pH-Wert des Bodens beeinflußt werden. Dies spielt beispielsweise dann eine Rolle, wenn der Boden aufgrund der Umweltbedingungen oder aufgrund intensiver früherer Nutzung zu sauer geworden ist. Kenntnisse über die dem Boden notwendigerweise zuzuführenden Mineralstoffe gewinnt man im praktischen Bereich am einfachsten dadurch, daß man eine Bodenanalyse vornimmt und ermittelt, welche Mineralstoffe zur Anreicherung sinnvollerweise verwendet werden.

In einer besonders bevorzugten Ausführungsform des Trestergranulats enthält der Kern einen odere mehrere Mineralstoffe (Makroelemente) in Form wasserlöslicher Salze, bevorzugt in Form von Carbonaten, Sulfaten, Phosphaten, Citraten und/oder Acetaten. In gleicher Weise ist es jedoch auch möglich, daß der Kern des Trestergranulats einen oder mehrere Mineralstoffe in Form wasserlöslicher Oxide enthält. Beispiele hierfür sind basische Oxide (MgO, CaO) oder Aquoxide. Mit Vorteil sind die wasserlöslichen Salze und/oder Oxide Verbindungen der Alkali- und/oder Erdalkalimetalle. Besonders bevorzugt werden hierbei Erdalkalimetalle. Besondere Beispiele für Alkalimetalle sind Natrium und/oder Kalium, besondere Beispiele für Erdalkalimetalle sind Calcium- und/oder Magnesium. Dem Kern des Trestergranulats kann einer oder können mehrere der genannten Mineralstoffe zugesetzt werden. Dies kann mit Vorteil dann geschehen, wenn die Böden übersäuert sind und darüberhinaus für die spätere Bepflanzung (Chlorophyllbildung) Magnesium benötigen. Die Mengen liegen bevorzugt bei 15 bis 35 Gew.-% aller Mineralstoffe, bezogen auf das Gesamtgewicht des Kerns der Granulate, können jedoch in Abhängigkeit von den Bodenerfordernisse in weiten Grenzen gewählt werden.

Eine weitere bevorzugte Ausführungsform der Erfindung, die allerdings nicht zwingend erforderlich ist, kann darin bestehen, daß der Kern des verkapselten Trestergranulats zusätzlich Mikroorganismen enthält. Für diese Ausführungsform kommen insbesondere diejenigen Mikroorganismenspezies in Frage, die im Boden natürlicherweise auch vorhanden sind und in der Humusbildung wirken können, aber in speziellen Fällen aufgrund der Umweltbedingungen im Boden nicht (mehr) zu finden sind. Mit Vorteil enthält der Kern des erfindungsgemäßen verkapselten Trestergranulats Bakterien und/oder Pilze, wobei Bakterien der Gattung Bacillus und Pilze der Gattungen Aspergillus oder Penicillium besonders bevorzugt sind. Praktisch besonders vorteilhaft sind Bakterien der Spezies Bacillus subtilis und/oder Bacillus megatherium sowie Pilze der Spezies Penicillium chrysogenum und Aspergillus niger. Die Mengen liegen bevorzugt bei einer Keimzahl von 10⁵ bis 10⁶ KBE/g (Kolonie-bildende Einheiten pro Gramm), bezogen auf das Gesamtgewicht des Kerns.

Der besondere Vorteil dieser Ausführungsform besteht darin, daß die Holzbestandteile des Kerns des Trestergranulats durch die zugesetzten Mikooorganismen zersetzt werden, wodurch die Bodenaktivität erhöht und die Bodenkrume gelockert wird. Dies geschieht auch dann, wenn der Boden selbst keine Mikroorganismen (mehr) enthält. Ein weitere Vorteil dieser Ausführungsform ist darin zu sehen, daß die Bakterien der Gattung Bacillus Sporen bilden können und diese Sporen als Dauerformen die bakterielle Aktivität, d. h. beispielsweise den Abbau der Holzbestandteile im Kern des Trestergranulats, nicht sofort starten. Dies geschieht erst dann, wenn optimale Bedingungen herrschen. Optimale Bedingungen sind jedoch erst dann gegeben, wenn das erfindungsgemäße Trestergranulat im Boden durch Feuchtigkeit angegriffen wird.

Der Einsatz von Pilzen kann beispielsweise auch dadurch erfolgen daß diese in Mycelform vorliegen, mit dem der Kern des erfindungsgemäßen Trestergranulats angeimpft wird. Dies hat den Vorteil, daß das Mycel - der eigentliche Pilzkörper - sofort seine physiologische Aktivität (Abbau) entfaltet und zur Humusbildung beiträgt.

Zur Verbesserung der bakteriellen Aktivität kann der Kern des Trestergranulats gemäß der Erfindung zusätzlich organische Stickstoffträger enthalten. Diese dienen den Mikroorganismen als Stickstoff-Quelle und können eine oder mehrere Komponenten aus der Gruppe Harnstoff, Grünmehl, Brennesselmehl, Wildkräutermehl, Wildkräutergranulat, Futterhefe, getrocknete Kartoffelschlempe, Maiskleber, getrocknetes Blutmehl, Fischmehl, getrockneter Fischpreßsaft, Fleischfuttermehl, Futterknochenschrot, Knochenmehl, Knochenpräzipitat, Knochenasche, Hornmehl, Tiermehl, Seealgenmehl, Stallmist, Rinderdung, Pferdedung, Hühnerdung, Molke und Melasse sein.

Die Mengen der organischen Stickstoffträger können ebenfalls in Abhängigkeit von den vorhandenen Bedingungen und der gewünschten Anreicherung in weiten Grenzen gewählt werden. Sie liegen bevorzugt bei 5 bis 10 Gew.-%, besonders bevorzugt bei 6 bis 9 Gew.-% Stickstoff, bezogen auf das Gesamtgewicht des Granulats.

Gemäß einer weiteren bevorzugten Ausführungsform enthält der Kern des Trestergranulats gemäß der Erfindung noch zusätzliche Stoffe, die der Verbesserung des Bodens dienen können. Solche Stoffe können beispielsweise Stoffe sein, die die Feuchtigkeit im Boden halten, ohne daß es zu Staunässe kommt. Diese Stoffe nehmen auch die gegebenenfalls mit den Trestern und/oder der Obstschlempe eingebrachten Feuchtigkeitsmengen auf, wobei sie beispielsweise quellen und so die Feuchtigkeit halten können. Insgesamt wird damit ein Feuchtigkeitsgehalt im Kern eingestellt, der den oben angegebenen bevorzugten Werten entspricht. Derartige Stoffe sind beipielsweise Alginate, Agar-Agar, Pektine, Ethylcellulose, Sägemehl, Holzmehl, Thomasmehl, Urgesteinsmehl, Braunkohle-(flug-)asche, Steinkohle-(flug-)asche und Tonerden wie beispielsweise Montmorillonite oder Bentonite. Der Vorteil eines Zusatzes der genannten Substanzen liegt darin, daß die physikalische Beschaffenheit des Bodens deutlich verbessert wird. Der Boden nimmt nach Zusatz derartiger Stoffe eine verbesserte Krümelung an. Die Lockerung der Krume führt zu einer höheren Gasdurchlässigkeit und erhöht außerdem das Wasserbindevermögen.

Die Menge der genannten Stoffe ist nicht kritisch und kann in weiten Bereichen schwanken. Die in der Praxis eingesetzten Mengen lassen sich beispielsweise in Abhängigkeit von dem Grad der gewünschten Lockerung des Bodens oder dem Wasseraufnahmevermögen bzw. der Feuchtigkeitsquellung wählen. Sie können vorzugsweise bei 15 bis 35 Gew.-% liegen, bezogen auf das Gesamtgewicht des Kerns der erfindungsgemäßen Trestergranulate.

Aufgrund besonderer Bedingungen, beispielsweise einer starken gartenwirtschaftlichen Nutzung oder besonderer Umweltbedingungen (z. B. pH-Wert), kann der Boden auch an Spurenelementen verarmt sein. Es entspricht deswegen einer weiteren bevorzugten Ausführungsform der Erfindung, dem verkapselten Trestergranulat im Kern Spurenelemente zuzusetzen. Diese entstammen - je nach den Bedürfnissen - der Gruppe wasserlösliche Stickstoffverbindungen, wasserlösliche Phosphate, wasserlösliche Sulfate, wasserlösliche Borverbindungen, Fluoride, Iodide, Mangan, Kupfer, Eisen, Cobalt, Nickel, Molybdän, Zinn, Seien und Zink. Besondere Erfordernisse können auch den Zusatz anderer Spurenelemente wünschenswert machen. Deren Mengen liegen - je nach den Bodenverhältnissen - vorzugsweise bei 0,5 bis 2,0 Gew.-%.

Die Herstellung des Kerns des erfindungsgemäßen Trestergranulats erfolgt in an sich aus dem Stand der Technik bekannter Weise. Im einfachsten Fall wird der gewünschte Kern aus Trester bzw. aus einem Gemisch aus mehreren Trestersorten in einem Mischer hergestellt. Sofern vorgesehen, können dieser Mischung die Mineralstoffe (Makroelemente) und Holzbestandteile beigemengt werden.

Sollen dem Kern des erfindungsgemäßen verkapselten Trestergranulats Mikroorganismen zugesetzt werden, so geschieht das in der Weise, daß man dem Gemisch aus Trestergranulat und Mineralstoffen beispielsweise eine Zubereitung gefriergetrockneter Mikroorganismen, beispielsweise Bakterien zusetzt. Es ist jedoch auch denkbar, die Bakterien als Sporen in Form einer nassen Aufschlämmung oder Suspension zuzusetzen, wie sie direkt einem dafür geeigneten Fermenter entnommen werden. Der Vorteil der letzteren Ausführungsform besteht darin, daß die Wasserbestandteile der Bakteriensuspension bei dieser Herstellungsweise vom Holz aufgesogen werden können und damit schon ein erster Schritt zum Abbau des Splintholzbestandteils des Kerns in die Wege geleitet werden kann. Die eingearbeiteten Bakteriensporen keimen aus und beginnen mit dem Abbau der Holzbestandteile erst bei Vorliegen optimaler Bedingungen, d. h. einer ausreichenden Feuchtigkeit und für den Abbau hinreichenden Temperaturen. Die Stickstoffträger dienen den Bakterien dann als Stickstoffquelle, während die Spurenelemente und Mineralstoffe den Mineralbedarf der Mikroorganismen decken.

Für besondere Zwecke, für die beispielhaft die Verbesserung der Wachstumsbedingungen für die Mikroorganismen zu nennen ist, können dem Kern des erfindungsgemäßen Trestergranulats noch weitere Substanzen wie beispielsweise Vitamine, Aminosäuren und/oder Hefen zugesetzt werden. Geeignete Vitamine für diesen Zweck sind Vitamin A und/oder seine Salze, beispielsweise Vitamin A-Palmitat oder Vitamin A-Acetat, oder Vorläufer des Vitamins A, wie beispielsweise β-Carotin, Vitamin B1, Vitamin B2, Nicotinsäureamid (Vitamin B3), Vitamin B6, Vitamin B12, Vitamin C, Vitamin D3, Calciumpantothenat, Vitamin E und/oder seine Ester wie beispielsweise Vitamin E-Acetet, Vitamin K3, Rutin ("Vitamin P") oder auch andere Vitamine und/oder deren Vorläufer. Besonders bevorzugt werden Vitamine der B-Gruppe und ein ausgewogener, d. h. die genannten Vitamine in adequaten Wirkstoffmengen enthaltender Gesamt-Vitamin-Komplex.

Als Aminosäuren kommen insbesondere p-Aminobenzoesäure, dem als Wirkstoff für das Bakterienwachstum besondere Bedeutung zukommt, Carnitin, Methionin, Tryptophan, Cystein, Glutaminsäure und Asparaginsäure infrage. Besonders bevorzugt aus der Gruppe der Aminosäuren sind proteinogene Aminosäuren.

Weitere vorteilhafte Zusätze sind Allantoin, Casein und seine Abbauprodukte, Chlorophyll, Peptone und ihre Abbauprodukte, Cholin und Orotsäure.

Die dem Kern der erfindungsgemäßen Trestergranulate zusetzbaren Hefen können solche Substanzen sein, die bei der Bier- und/oder Weingärung anfallen und sich nach dem Gärungsvorgang am Boden des Gärgefäßes absetzen und nach Abziehen des Weins oder Biers entnommen werden können. Diese Substanzen sind sehr nährstoffhaltig und sind für die beispielsweise als Bodenverbesserer geeigneten verkapselten Trestergranulate als Zusatz besonders bevorzugt. Es sind jedoch in gleicher Weise auch Hefen aus anderen industriellen Fermentationsprozessen verwendbar. Solche Hefen werden teilweise auch als "Futterhefe" für Fütterungszwecke auf dem Markt angeboten.

Die Menge der genannten zusätzlichen Stoffe ist erfindungsgemäß nicht kritisch. Sie liegt vorteilhafterweise bei 5 bis 30 Gew.-%, besonders bevorzugt bei 10 bis 25 Gew.-%, bezogen auf das Gesamtgewicht des Kerns des Trestergranulats.

Erfindungsgemäß kann der Kern des erfindungsgemäßen Trestergranulats gemäß einer bevorzugten Ausführungsform stabilisierende Komponenten enthalten, die ein oder mehrere härtbare(s), wasserlösliche(s) oder in Wasser dispergierbare(s) oder quellbare(s) natürliche(s) Polymer(e) oder ein oder mehrere davon abgeleitete(s) Derivat(e) umfassen. Diese Komponenten werden in dem oben angesprochenen Mischvorgang zu den anderen Komponenten gegeben und gegebenenfalls unter geringfügig erhöhten Temperaturen, beispielsweise 25 bis 30 °C, möglicherweise auch höher, ausgehärtet. Der Aushärt-Vorgang kann beispielsweise unter Verpressen, Pelletieren oder Granulieren erfolgen. Andere Arbeitsweisen sind jedoch auch möglich. Durch den Zusatz dieser natürlichen Polymer-Materialien wird die Handhabbarkeit des erfindungsgemäßen Trestergranulats wesentlich verbessert. Zudem ist es von Vorteil, daß die härtbaren Polymermaterialien dazu beitragen können, zur Verbesserung der Bodengegebenheiten beizutragen. Das bei dieser Verfahrensweise entstehende Trestermaterial wird als "Trestergranulat ohne Verkapselung" oder "unverkapseltes Trestergranulat" bezeichnet.

Erfindungsgemäß ist der oben beschriebene Kern des Trestergranulats gemäß einer weiteren Ausführungsform mit einer Umhüllung aus einem oder mehreren härtbaren, wasserlöslichen oder in Wasser dispergierbaren oder quellbaren natürlichen Polymer(en) oder einem oder mehreren davon abgeleiteten Derivat(en) versehen. Diese harte Polymerhülle schirmt nicht nur den Kern gegen die Umgebung ab und verhindert dadurch, daß Feuchtigkeit zutreten kann, sondern hält auch die Kernbestandteile praktisch zusammen. Die Handhabung des verkapselten Trestergranulats wird dadurch erheblich erleichtert. Die Lagerfähigkeit wird durch die harte Polymerhülle wesentlich verbessert, und es läßt sich ein auch nach längerer Lagerzeit schüttbares Granulat bereitstellen, dessen Herstellung und Handhabung nicht mit der Bildung gesundheitsgefährdender Stäube verbunden ist.

In einer bevorzugten Ausführungsform der Erfindung besteht die Umhüllung des Kerns oder auch das Material, das dem Kern zur Stabilisierung beigegeben werden kann, aus einem Protein oder auch mehreren Proteinen, von denen Gelatine als besonders bevorzugt zu nennen ist. Mit Gelatine lassen sich gut ausgehärtete, dauerhafte Umhüllungsschichten erhalten, die das Granulat hervorragend lagerfähig machen. Genauso läßt sich mit Gelatine eine hervorragende "innere Stabilisierung" des Kerns erreichen, ohne daß es zu dessen praktischer Handhabung einer Umhüllung bedarf. Andere Proteine wie beispielsweise Getreideproteine, Prolamin, Kollagen usw. sind ebenfalls geeignet; Gelatine ist jedoch bevorzugt.

Weitere ebenfalls bevorzugte Polymere natürlichen Ursprungs zur Verwendung in der inneren (durch Beimischung in den Kern) oder äußeren Stabilisierung des erfindungsgemäßen Trestergranulats (durch Ausbildung einer Umhüllung) sind Polysaccharide, von denen Chitin als besonders bevorzugt zu nennen ist. Chitin ist ebenfalls für seine Stabilität im festen Zustand und für sein geringes Gewicht bekannt. Es ist darüberhinaus aus in großen Mengen preiswert erhältlich. Weitere erfindungsgemäß ebenfalls mit Vorteil verwendbare natürliche Polymere sind Pektine, Alginate und Agar-Agar. Anstelle der genannten Polymere können auch modifizierte Polymere, beispielsweise chemisch modifizierte Polymere, verwendet werden. Es können auch mehrere Polysaccharide oder Mischungen von Polysacchariden und Proteinen wie beispielsweise Mischungen aus Gelatine und Chitin oder Mischungen der genannten Polymere mit anderen natürlichen Polymeren oder deren Derivaten verwendet werden.

Die Dicke der Polymerschicht bei Ausbildung einer Umhüllung (äußere Stabilisierung) ist nicht kritisch. Sie kann beispielsweise bei 0,1 bis 0,3 mm liegen. Bevorzugt ist in jedem Fall, daß die Polymerschicht den Kern des verkapselten Trestergranulats vollständig umhüllt.

In einer weiteren, ebenfalls bevorzugten Ausführungsform der Erfindung wird die Polymerschicht, unabhängig von den oben genannten Bestandteilen des Kerns, mit Bakteriensporen angeimpft oder mit einer Bakteriensuspension versetzt. Damit lassen sich vorteilhaft auch mit der Umhüllung des verkapselten Trestergranulats Mikroorganismen in den Boden einbringen.

Die Aufbringung der Polymerumhüllung, bevorzugt der Gelatineumhüllung und/oder der Chitinumhüllung, erfolgt in an sich aus dem Stand der Technik bekannter Weise. So kann man die Mischung aus Trester(n), gegebenenfalls mit Holzbestandteilen und zugesetzten Mineralstoffen und/oder Spurenelementen sowie gegebenenfalls nach Animpfung mit Bakteriensporen oder Pilzmycel oder nach Zusatz einer Mikroorganismensuspension, in einen Mischer einbringen und die Mischung dann mit einer Polymerlösung, bevorzugt mit einer Gelatinelösung und/oder Chitinlösung, besprühen. Dies geschieht bei erhöhter Temperatur, aus praktischen Gründen bevorzugt bei Temperaturen zwischen 50 und 70 °C. Bei niedrigeren Temperaturen lassen sich Polymerlösungen, bevorzugt Gelatine- und/oder Chitinlösungen, in der erforderlichen Konzentration nicht sprühfähig halten. Besonders bevorzugte Temperaturbereiche liegen zwischen 50 und 60 °C. Die Temperaturbereiche sind jedoch nicht kritisch. Es ist in diesem Zusammenhang zu berücksichtigen, daß bei höheren Temperaturen als 85 bis 90 °C die in der Lösung vorhandenen vegetativen Bakterienzellen abgetötet werden und nur die Sporen übrigbleiben. Diese sind jedoch bis weit über 100 °C überlebensfähig.

Nach Aufbringen der Polymerumhüllung auf dem oben beschriebenen Wege oder nach Einbringen der härtenden Komponente in den Kern und anschließendes Aushärten erhält man ein hartes Düngermaterial. Besonderer Vorteil des so entstandenen Düngers bzw. Bodenverbesserers ist, daß keine Stäube, insbesondere Mineralien- oder Holzstäube auftreten können. Im Stand der Technik waren diese im Herstellungsprozeß sehr häufig hinderlich und erforderten besondere Sicherheits- und Gesundheitsvorkehrungen für die beteiligten Arbeitskräfte. Dies ist jedoch nicht nur ein für die Hersteller wichtiger Aspekt, sondern betrifft auch den Anwender. Auch nach längerer Lager- bzw. Transportzeit braucht beim Anwender nicht mit dem Auftreten von Staubanteilen in dem anwendungsbereiten Dünger- bwz. Bodenverbesserermaterial gerechnet zu werden.

Erfindungsgemäß ist es besonders bevorzugt, das verkapselte oder unverkapselte Trestergranulat als Düngermaterial oder Bodenverbesserer zu verwenden. Dieses weist gegenüber aus dem Stand der Technik bekannten Materialien mehrere gewichtige Vorteile auf. So wird der im Kern enthaltene Trester relativ schnell in Boden-verbessernde organische Materialien umgewandelt. Ist gemäß den bevorzugten Ausführungsformen auch Holz im Trestergranulat-Kern enthalten, wird der Splintholzanteil nach Einbringung des Materials in den Boden unter entsprechend geeigneten Bodenbedingungen sofort durch Bakterien und Pilze abgebaut. Dies kann unter optimalen Bedingungen bereits innerhalb weniger Wochen geschehen und kann dadurch beschleunigt werden, daß man - wie oben bereits als bevorzugte Ausführungsform beschrieben - dem Kern des erfindungsgemäßen verkapselten oder unverkapselten Trestergranulats Bakterien zusetzt. Die für den Abbau erforderlichen Bakterien stehen dabei nicht nur sofort für den Abbau des Splintholzanteils des Kerns bereit, sondern vermehren sich auch unter günstigen Bedingungen in der Weise, daß sie in die Umgebung des Düngermittelteilchens übertragen werden und so zu einer qualitativen Verbesserung des Bodens in diesem Bereich führen. Die Verbesserung der Bodenqualität reicht also über die Zeit hinaus, in der der Splintholzanteil des Kerns bis zum vollständigen Verschwinden abgebaut wird.

Der gegebenenfalls im Kern enthaltene Kernholzanteil ist gegen bakterieilen Abbau wesentlich beständiger. Er dient damit in der ersten Phase der Bodenauflockerung. Diese ist vorteilhaft hinsichtlich des Gasaustausches einerseits und des Wasserhaushalts des Bodens andererseits. Kernholz wird im Regelfall nur durch Pilze abgebaut. Dieser Abbau dauert wesentlich länger und kann bei harten Kernhölzern ein Jahr und länger dauern. Die Dauer der Abbauzeit ist jedoch von der besonderen Holzart abhängig und damit auch über diese zu steuern.

Bei besonderen Bodengegebenheiten, beispielsweise Mangelerscheinungen im Bereich bestimmter Mineralien und Spurenelemente, kann den Erfordernissen durch die Zusammensetzung des Mineralien- (Makroelement-) bzw. Spurenelemente- (Mikroelemente-)Bestandteils des Kern Rechnung getragen werden. Besonders Spurenelemente können im Einzelfall eine wichtige Rolle spielen.

Darüber hinaus ist für eine gesunde Bodenbeschaffenheit der pH-Wert von großer Bedeutung. Saure Böden können durch das erfindungsgemäße verkapselte Trestergranulat insofern verbessert werden, als ihre Pufferkapazität durch bestimmte Salzbestandteile des Kerns des verkapselten oder unverkapselten Trestergranulats verbessert werden kann. So können die Mineralstoffe in Form von Salzen zugegeben werden, deren Anionen eine relativ hohe Pufferkapazität aufweisen. Derartige Anionen sind beispielsweise das Citrat- und das Acetation.

Die Umhüllung des Kerns des erfindungsgemäßen verkapselten Trestergranulats mit Gelatine oder Chitin oder die Einbringung dieser Materialien in den Kern hat den Vorteil, daß nicht nur ein gut in Wasser quellbarer natürlicher Polymer-Träger zugegen ist, sondern auch einzelne Granulatkörner erhalten werden, was zu einer guten Lagerfähigkeit und Handhabbarkeit des Materials führt. Das erfindungsgemäße verkapselte Trestergranulat mit Gelatine oder Chitinumhüllung wie auch das unverkapselte Trestergranulat, das die Gelatine- und/oder Chitinkomponenten im Kern enthält, fließt frei, läßt sich gut abpacken und ist darüberhinaus auch ohne Aufnahme von Feuchtigkeit oder Verlust der freien Fließbarkeit über längere Zeit lagerstabil.

Ein weiterer Vorteil des erfindungsgemäßen verkapselten oder unverkapselten Trestergranulats in der Ausführungsform, in der der Kern neben Trester(n), Holzanteilen, Mineralstoffen und gegebenenfalls Mikroorganismen auch noch Alginate, Pektine sowie Tonmaterialien enthält, liegt darin, daß Alginate, Pektine und die Tonmaterialien, insbesondere Bentonite und Montmorillonite, in weitem Umfang die Wasseraufnahmefähigkeit und Quellbarkeit des Düngermaterials beeinflussen und damit auch die Fähigkeit des Bodens zum positiven hin verändern, aufgenommenes Wasser zu halten. Dies ist besonders dann erforderlich, wenn das Wasserrückhaltevermögen des Bodens aufgrund der speziellen Zusammensetzung schlecht ausgeprägt ist. Diese Erscheinung betrifft beispielsweise Sandböden. Wie bei Verwendung des erfindungsgemäßen verkapselten oder unverkapselten Trestergranulats als Düngermaterial bzw. als Bodenverbesserer gefunden wurde, konnte auch Erdreich mit einem sehr hohen Kleieanteil oder auch einem sehr hohen Sandanteil innerhalb relativ kurzer Zeit sichtlich aufgelockert und die Drainierung eines solchen Bodens sichtbar verbessert werden.

Die Erfindung wird nachfolgend durch Beispiele näher erläutert.

### Beispiel 1

25,0 kg Buchen-Kernholz wurden in einen Mischer gegeben. Anschließend wurden 1,0 kg einer Mischung aus Alginaten, Pektinen und Algenmehl und 74,0 kg einer Tonerdemischung (Bentonit und Montmorillonit) zugegeben. Die Gesamtmischung wurde sorgfältig durchgemischt.

10,0 kg Gelatine wurden mit 90,0 kg demineralisierten Wassers vermischt. Die Mischung wurde gut gerührt. Man ließ danach die Gelatine aufquellen und erwärmte die Mischung abschließend auf 50 bis 60 °C. Man erhielt so eine klare, leicht gelbliche, viskose Lösung.

20 kg der 10 %-igen Gelatine-Lösung wurden bei 50 bis 60 °C auf 100 kg der Kernholz, Alginate, Pektine, Algenmehl und Tonerden enthaltenden Mischung in dem Mischer aufgesprüht, um das Produkt im Mischer zu verkapseln. Die den Kern bildenden Teilchen waren letztendlich vollständig von einer Gelatineschicht umgeben. Man erhielt so 110 kg eines vollständig verkapselten, Alginate, Pektine, Algenmehl und Tonerden sowie Buchenkernholz im Kern enthaltenden Holzgranulats.

### Beispiel 2

Es wurde wie in Beispiel 1 verfahren. Im Unterschied zur Vorgehensweise von Beispiel 1 wurde der Kernholzanteil mit Bacillus subtilis- und Bacillus megatherium-Sporen in einer Menge von 10⁵ bis 10⁶ / g angeimpft. Es wurde so ein verkapseltes Holtgranulat erhalten, das zusätzlich zu den in Beispiel 1 genannten Komponenten noch Bacillus-Sporen im Kern enthielt.

### Beispiele 3 bis 15

Es wurde wie in Beispiel 2 vorgegangen. Die nachfolgend im einzelnen angegebenen Holzanteile wurden mit einer 10⁵ bis 10⁶ / g Bacillus subtilis- und Bacillus megatherium-Sporen enthaltenden Lösung angeimpft. Die Holzbestandteile und/oder Mineralstoffe und/oder Spurenelemente und/oder Stickstoff-Träger und/oder Alginate, Pektine, Ethylcellulose bzw. Tonerden enthaltenden Kerne wurden abschließend mit einer 10 %-igen Gelatine-Lösung besprüht, wie sie in Beispiel 1 beschrieben ist. Es wurden so verkapselte Holzgranulate erhalten, die sich hervorragend als Düngermaterialien bzw. Bodenverbesserer eigneten.

### Beispiel 3

20,0 kg Splintholz (Kiefer, Tanne, Fichte)
1.0 kg Mischung aus Alginaten, Pektinen und Algenmehl
79,0 kg Tonerde-Mischung (Bentonite und Montmorillonite)

### Beispiel 4

20,0 kg Splintholz (Kiefer, Tanne, Fichte)
80,0 kg Magnesiumcarbonat
Statt Magnesiumcarbonat kann auch Magnesiumsulfat verwendet werden.

### Beispiel 5

20,0 kg Splintholz (Kiefer, Tanne, Fichte)
80,0 kg Calciumcarbonat

### Beispiel 6

10,0 kg Splintholz (Kiefer, Tanne, Fichte)
20,0 kg Kernholz (Buche)
70,0 kg Tonerde-Mischung (Bentonite und Montmorillonite)

### Beispiel 7

10,0 kg Splintholz (Kiefer, Tanne, Fichte)
20,0 kg Kernholz (Buche)
70,0 kg Calciumcarbonat

### Beispiel 8

10,0 kg Splintholz (Kiefer, Tanne, Fichte)
20,0 kg Kernholz (Buche)
1,0 kg Luzernemehl
69,0 kg Calciumcarbonat
Statt Luzernemehl können auch Alginate und/oder Pektine und/oder Algenmehl verwendet werden.

### Beispiel 9

10,0 kg Splintholz (Kiefer, Tanne, Fichte)
20,0 kg Kernholz (Buche)
1,0 kg Luzernemehl
69,0 kg Magnesiumsulfat
Statt Luzernemehl können auch Alginate und/oder Pektine und/oder Algenmehl verwendet werden.

### Beispiel 10

10,0 kg Splintholz (Kiefer, Tanne, Fichte)
20,0 kg Kernholz (Buche)
35,0 kg Blutmehl getrocknet
35,0 kg Calciumcarbonat

### Beispiel 11

10,0 kg Splintholz (Kiefer, Tanne, Fichte)
20,0 kg Kernholz (Buche)
35,0 kg Blutmehl getrocknet
35,0 kg Magnesiumsulfat
Statt Magnesiumsulfat kann auch Magnesiumcarbonat verwendet werden.

### Beispiel 12

10,0 kg Splintholz (Kiefer, Tanne, Fichte)
20,0 kg Kernholz (Buche)
35,0 kg Hornmehl oder Fischmehl, Fischpreßsaft getrocknet, Futterknochenschrot, Knochenmehl, Tiermehl, Fleischfuttermehl
35,0 kg Magnesiumsulfat
Statt Magnesiumsulfat kann auch Magnesiumcarbonat verwendet werden.

### Beispiel 13

10,0 kg Splintholz (Kiefer, Tanne, Fichte)
20,0 kg Kernholz (Buche)
35,0 kg Hornmehl oder Fischmehl, Fischpreßsaft getrocknet, Futterknochenschrot, Knochenmehl, Tiermehl, Fleischfuttermehl
35,0 kg Calciumcarbonat

### Beispiel 14

10,0000 kg Splintholz (Kiefer, Tanne, Fichte)
20,0000 kg Kernholz (Buche)
43,0205 kg Spurenelemente:
14,0000 kg Stickstoff wasserlöslich
10,0000 kg Phosphate wasserlöslich
14,0000 kg Kali
4,0000 kg Magnesiumsulfat
0,5000 kg Mangansulfat
0,2500 kg Kupfersulfat
0,2500 kg Borax
0,0005 kg Cobaltsulfat
0,0200 kg Zinksulfat
26,9795 kg Calciumcarbonat

### Beispiel 15

10,0 kg Splintholz (Kiefer, Tanne, Fichte)
20,0 kg Kernholz (Buche)
43,0205 kg Spurenelemente:
14,0000 kg Stickstoff wasserlöslich
10,0000 kg Phosphate wasserlöslich
14,0000 kg Kali
4,0000 kg Magnesiumsulfat
0,5000 kg Mangansulfat
0,2500 kg Kupfersulfat
0,2500 kg Borax
0,0005 kg Cobaltsulfat
0,0200 kg Zinksulfat
26,9795 kg Magnesiumcarbonat

### Beispiel 16

Das erfindungsgemäße verkapselte Holzgranulat wurde in einem Freilandversuch über sechs Monate auf seine Eignung in der Verwendung als Düngermaterial bzw. Bodenverbesserer getestet. Der Boden wies einen außerordentlich hohen Kleieanteil auf.

Als Dünger wurde das Material des Beispiels 7 verwendet. Der Kernholz- und Splintholzanteil im Kern hatte eine Körnung von 2,0 bis 3,0 mm (durchschnittlicher Durchmesser). Zur Beurteilung des Einflusses des verkapselten Holzgranulats auf die Bodenbeschaffenheit wurde dieses in einer Menge von 400 g/m² leicht in den Erdboden eingeharkt. Die Versuchsfläche hatte eine Größe von 25 m². Als Vergleich diente eine ebenfalls 25 m² große Fläche, in die kein verkapseltes Holzgranulat eingeharkt wurde. Beide Flächen wurden über einen Zeitraum von sieben Monaten nicht behandelt.

Nach sieben Monaten konnten im Boden keine Holzpartikel mehr gefunden werden. Offensichtlich waren die Holzbestandteile durch Mikroorganismen abgebaut worden.

Die Bodenbeschaffenheit hatte sich innerhalb der Versuchszeit auf dem Feld, das mit dem erfindungsgemäßen verkapselten Holzgranulat behandelt worden war, deutlich geändert. Im Vergleich zur unbehandelten Fläche zeigte sich eine deutliche Bodenauflockerung. Der Boden hatte eine feinkrümelige Beschaffenheit und war sehr gut belüftet. Ebenfalls trat auf der behandelten Fläche keine Staunässe auf. Der Boden besaß also eine gute Drainierung. Im Gegensatz dazu zeigte sich auf der unbehandelten Kontrollfläche deutlich die schlechte Drainierung in Form von auftretender Staunässe.

### Beispiel 17:

| | | |
|---|---|---|
| Kern: | 10,0 | kg Splintholz |
| | 20,0 | kg Kernholz |
| | 30,0 | kg Obsttrester |
| | 40,0 | kg CaCO₃ |
| Hülle: | 20,0 | kg einer 10 bis 30 %igen Gelatinelösung, angeimpft mit Bacillussporen |

### Beispiel 18:

| | | |
|---|---|---|
| Kern: | 10,0 | kg Splintholz |
| | 20,0 | kg Kernholz |
| | 30,0 | kg Obsttrester |
| | 40,0 | kg MgCO₃/MgSO₄ |
| Hülle: | 20,0 | kg einer 10 bis 30 %igen Gelatinelösung |

### Beispiel 19:

| | | |
|---|---|---|
| Kern: | 10,0 | kg Splintholz |
| | 20,0 | kg Kernholz |
| | 30,0 | kg Obsttrester/Citrustrester |
| | 40,0 | kg Kaliumsulfat |
| Hülle: | 20,0 | kg einer 10 bis 30 %igen Gelatinelösung |

### Beispiel 20:

| | | |
|---|---|---|
| Kern: | 10,0 | kg Splintholz |
| | 20,0 | kg Kernholz |
| | 30,0 | kg Obsttrester/Citrustrester |
| | 14,0 | kg Stickstoff, wasserlöslich |
| | 10,0 | kg Phosphat, wasserlöslich |
| | 10,0 | kg Kaliumsulfat |
| | 4,0 | kg Magnesiumsulfat/MgCO₃ |
| | 0,50 | kg Mangansulfat |
| | 0,250 | kg Kupfersulfat |
| | 0,250 | kg Borax |
| | 0,005 | kg Cobaltsulfat |
| | 0,200 | kg Zinksulfat |
| | 0,795 | kg Eisensulfat |
| Hülle: | 20,0 | kg einer 10 bis 30 %igen Gelatinelösung |

### Beispiel 21:

| | | |
|---|---|---|
| Kern: | 10,0 | kg Splintholz |
| | 20,0 | kg Kernholz |
| | 30,0 | kg Brennesselmehl |
| | 40,0 | kg CaCO₃ |
| Hülle: | 20,0 | kg einer 10 bis 30 %igen Gelatinelösung |

### Beispiel 22:

| | | |
|---|---|---|
| Kern: | 10,0 | kg Splintholz |
| | 20,0 | kg Kernholz |
| | 30,0 | kg Brennesselmehl/Granulat |
| | 40,0 | kg MgCO₃/MgSO₄ |
| Hülle: | 20,0 | kg einer 10 bis 30 %igen Gelatinelösung |

### Beispiel 23:

| | | |
|---|---|---|
| Kern: | 10,0 | kg Splintholz |
| | 20,0 | kg Kernholz |
| | 30,0 | kg Brennesselmehl/Granulat |
| | 14,0 | kg Stickstoff, wasserlöslich |
| | 10,0 | kg Phosphat |
| | 10,0 | kg Kaliumsulfat |
| | 4,0 | kg MgSO₄/MgCO₃ |
| | 0,500 | kg MnSO₄ |
| | 0,250 | kg CuSO₄ |
| | 0,250 | kg Borax |
| | 0,005 | kg Cobaltsulfat |
| | 0,200 | kg Zinksulfat |
| | 0,795 | kg FeSO₄ |
| Hülle: | 20,0 | kg einer 10 bis 30 %igen Gelatinelösung |

### Beispiel 24:

| | | |
|---|---|---|
| Kern: | 10,0 | kg Splintholz |
| | 20,0 | kg Kernholz |
| | 30,0 | kg Wildkräutermehl/Granulat |
| | 40,0 | kg CaCO₃ |
| Hülle: | 20,0 | kg einer 10 bis 40 %igen Gelatinelösung |

### Beispiel 25:

| | | |
|---|---|---|
| Kern: | 10,0 | kg Splintholz |
| | 20,0 | kg Kernholz |
| | 30,0 | kg Wildkräutermehl/Granulat |
| | 40,0 | kg MgSO₄/MgCO₃ |
| Hülle: | 20,0 | kg einer 10 bis 40 %igen Gelatinelösung |

### Beispiel 26:

| | | |
|---|---|---|
| Kern: | 10,0 | kg Splintholz |
| | 20,0 | kg Kernholz |
| | 30,0 | kg Wildkräutermehl |
| | 14,0 | kg Stickstoff, wasserlöslich |
| | 10,0 | kg Phosphat |
| | 10,0 | kg Kaliumsulfat |
| | 4,0 | kg MgSO₄/MgCO₃ |
| | 0,500 | kg MnSO₄ |
| | 0,250 | kg CuSO₄ |
| | 0,250 | kg Borax |
| | 0,005 | kg Cobaltsulfat |
| | 0,200 | kg Zinksulfat |
| | 0,795 | kg FeSO₄ |
| Hülle: | 20,0 | kg einer 10 bis 30 %igen Gelatinelösung |

### Beispiel 27:

| | | |
|---|---|---|
| Kern: | 10,0 | kg Splintholz |
| | 20,0 | kg Kernholz |
| | 0,01 | kg Vitamin B1 |
| | 0,01 | kg Vitamin B2 |
| | 0,01 | kg Vitamin B4 |
| | 0,01 | kg Vitamin B12 |
| | 0,01 | kg Vitamin D3 |
| | 0,01 | kg Vitamin K |
| | 0,01 | kg Vitamin A Palmitat/Acetat |
| | 0,01 | kg Vitamin E Acetat |
| | 0,01 | kg Folsäure |
| | 0,01 | kg Biotin |
| | 0,01 | kg Nicotinsäureamid |
| | 0,01 | kg Vitamin C (Ascorbinsäure) |
| | 0,01 | kg Ca-Panthenol |
| | 0,01 | kg Inosit |
| | 0,01 | kg Carotin |
| | 0,01 | kg Allantoin |
| | 0,01 | kg Methionin |
| | 0,01 | kg Cystein |
| | 0,01 | kg Tryptophan |
| | 0,01 | kg Pepton |
| | 0,01 | kg Rutin |
| | 0,01 | kg Chlorophyll |
| | 0,01 | kg Casein |
| | 0,01 | kg Carnitin |
| | 0,01 | kg Cholin |
| | 0,01 | kg p-Aminobenzoesäure |
| | 0,01 | kg Orotsäure |
| | 0,01 | kg Glutaminsäure |
| | 10,00 | kg Futterhefe |
| | 40,0 | kg CaCO₃ |
| | 10,0 | kg MgCO₃/MgSO₄ |
| | 9,720 | kg Spurenelemente |
| Hülle: | 20,0 | kg einer 10 bis 30 %igen Gelatinelösung |

### Beispiel 28:

| | | |
|---|---|---|
| Kern: | 10,0 | kg Splintholz |
| | 20,0 | kg Kernholz |
| | 70,0 | kg Braunkohleasche |
| Hülle: | 20,0 | kg einer 10 bis 30 %igen Gelatinelösung |

### Beispiel 29:

| | | |
|---|---|---|
| Kern: | 10,0 | kg Splintholz |
| | 20,0 | kg Kernholz |
| | 70,0 | kg Steinkohleasche |
| Hülle: | 20,0 | kg einer 10 bis 30 %igen Gelatinelösung |

### Beispiel 30:

| | | |
|---|---|---|
| Kern: | 10,0 | kg Splintholz |
| | 20,0 | kg Kernholz |
| | 10,0 | kg Melasse Florakal |
| | 10,0 | kg Melasse Monex |
| | 50,0 | kg CaCO₃ |
| Hülle: | 20,0 | kg einer 10 bis 30 %igen Gelatinelösung |

### Beispiel 31:

| | | |
|---|---|---|
| Kern: | 10,0 | kg Splintholz |
| | 20,0 | kg Kernholz |
| | 10,0 | kg Melasse Florakal |
| | 10,0 | kg Melasse Monex |
| | 50,0 | kg MgCO₃/MgSO₄ |
| Hülle: | 20,0 | kg einer 10 bis 30 %igen Gelatinelösung angeimpft mit Bacillussporen |

### Beispiel 32:

| | | |
|---|---|---|
| Kern: | 10,0 | kg Splintholz |
| | 20,0 | kg Kernholz |
| | 10,0 | kg Melasse Florakal |
| | 10,0 | kg Melasse Monex |
| | 20,0 | kg CaCO₃ |
| | 20,0 | kg MgCO₃/MgSO₄ |
| | 10,0 | kg Spurenelemente |
| Hülle: | 20,0 | kg einer 10 bis 30 %igen Gelatinelösung angeimpft mit Bacillussporen |

### Beispiel 33:

| | | |
|---|---|---|
| Kern: | 10,0 | kg Splintholz |
| | 20,0 | kg Kernholz |
| | 30,0 | kg Obstschlempe |
| | 40,0 | kg CaCO₃ |
| Hülle: | 20,0 | kg einer 10 bis 30 %igen Gelatinelösung |

### Beispiel 34:

| | | |
|---|---|---|
| Kern: | 10,0 | kg Splintholz |
| | 20,0 | kg Kernholz |
| | 10,0 | kg Obestschlempe |
| | 40,0 | kg MgCO₃/MgSO₄ |
| Hülle: | 20,0 | kg einer 10 bis 30 %igen Gelatinelösung, mit einem Gehalt an 15 % Chitin |

### Beispiel 35:

| | | |
|---|---|---|
| Kern: | 10,0 | kg Splintholz |
| | 20,0 | kg Kernholz |
| | 10,0 | kg Obestschlempe |
| | 40,0 | kg K₂SO₄ |
| Hülle: | 20,0 | kg einer 10 bis 30 %igen Gelatinelösung, mit einem Gehalt an 15 % Chitin |

### Beispiel 36:

| | | |
|---|---|---|
| Kern: | 10,0 | kg Splintholz |
| | 20,0 | kg Kernholz |
| | 10,0 | kg Pilzmycel/Penicillium chrysogenum |
| | 25,0 | kg CaCO₃ |
| | 15,0 | kg MgCO₃/MgSO₄ |
| | 10,0 | kg Kaliumsulfat/K₂CO₃ |
| | 10,0 | kg Spurenelemente |
| Hülle: | 20,0 | kg einer 10 bis 30 %igen Gelatinelösung |

### Beispiel 37:

Das erfindungsgemäße verkapselte Holzgranulat wurde in einem Freilandversuch über 12 Monate auf seine Eignung in der Verwendung als Düngermaterial bzw. Bodenverbesserer getestet. Der Boden wies einen außerordentlich hohen Kleieanteil auf.

Als Dünger wurde das Material des Beispiels 20 verwendet. Der Kernholz- und Splintholzanteil im Kern hatte eine Körnung von 2,1 bis 2,6 mm (durchschnittlicher Durchmesser). Zur Beurteilung des Einflusses des verkapselten Holzgranulats auf die Bodenbeschaffenheit wurde dieses in einer Menge von 500 g/m² leicht in den Erdboden eingeharkt. Die Versuchsfläche hatte eine Größe von 25 m². Als Vergleich diente eine ebenfalls 25 m² große Fläche, in die kein verkapseltes Holzgranulat eingeharkt wurde und die gleich neben der Versuchsfläche lag.

Nach 12 Monaten konnten im Boden keine Holzpartikel oder Trester-Reste mehr gefunden werden. Offensichtlich waren die Holzbestandteile durch Mikroorganismen abgebaut worden.

Die Bodenbeschaffenheit hatte sich innerhalb der Versuchszeit auf dem Feld, das mit dem erfindungsgemäßen verkapselten Holzgranulat behandelt worden war, deutlich geändert. Im Vergleich zur unbehandelten Fläche zeigte sich eine deutliche Bodenauflockerung. Der Boden hatte eine feinkrümelige Beschaffenheit und war sehr gut belüftet. Ebenfalls trat auf der behandelten Fläche keine Staunässe auf. Der Boden besaß also eine gute Drainierung.

Im Gegensatz dazu zeigte sich auf der unbehandelten Kontrollfläche deutlich die schlechte Drainierung in Form von auftretender Staunässe.

### Beispiel 38:

25,0 kg Obsttrester wurden in einen Mischer gegeben. Anschließend wurden 1,0 kg einer Mischung aus Alginaten, Pektinen und Algenmehl und 74,0 kg einer Tonerdemischung (Bentonit und Montmorillonit) zugegeben. Die Gesamtmischung wurde sorgfältig durchgemischt.

10,0 kg Gelatine wurden mit 90,0 kg demineralisierten Wassers vermischt. Die Mischung wurde gut gerührt. Man ließ danach die Gelatine aufquellen und erwärmte die Mischung abschließend auf 50 bis 60 °C. Man erhielt so eine klare, leicht gelbliche, viskose Lösung.

20 kg der 10 %-igen Gelatine-Lösung wurden bei 50 bis 60 °C auf 100 kg der Trester, Alginate, Pektine, Algenmehl und Tonerden enthaltenden Mischung in dem Mischer aufgesprüht, um das Produkt im Mischer zu verkapseln. Die den Kern bildenden Teilchen waren letztendlich vollständig von einer Gelatineschicht umgeben. Man erhielt so 110 kg eines vollständig verkapselten, Alginate, Pektine, Algenmehl und Tonerden sowie Obsttrester im Kern enthaltenden Trestergranulats.

In gleicher Weise konnte ein Granulat erhalten werden, wenn man in der obigen Verfahrensweise Gelatine durch Chitin ersetzte. Die klare Chitinlösung ließ sich ebenfalls problemlos auf den Trester-Granulatkern aufsprühen.

### Beispiel 39:

Es wurde wie in Beispiel 38 verfahren. Im Unterschied zur Vorgehensweise von Beispiel 38 wurde der Trester mit Bacillus subtilis- und Bacillus megatherium-Sporen in einer Menge von 10⁵ bis 10⁶ / g angeimpft. Es wurde so ein verkapseltes Trestergranulat erhalten, das zusätzlich zu den in Beispiel 38 genannten Komponenten noch Bacillus-Sporen im Kern enthielt.

### Beispiele 40 bis 57:

Es wurde wie in Beispiel 39 vorgegangen. Die nachfolgend im einzelnen angegebenen Tresteranteile wurden mit einer 10⁵ bis 10⁶ / g Bacillus subtilis- und Bacillus megatherium-Sporen enthaltenden Lösung angeimpft. Die Tresterbestandteile und/oder Mineralstoffe und/oder Spurenelemente und/oder Stickstoff-Träger und/oder Alginate, Pektine, Ethylcellulose bzw. Tonerden enthaltenden Kerne wurden abschließend mit einer 10 %-igen Gelatine- bzw. Chitin-Lösung besprüht, wie sie in Beispiel 38 beschrieben ist. Es wurden so mit Gelatine bzw. Chitin verkapselte Trestergranulate erhalten, die sich hervorragend als Düngermaterialien bzw. Bodenverbesserer eigneten.
(Beispiele 40 bis 45, 49 und 51 bis 54 mit Gelatinelösung;
Beispiele 46 bis 48, 50 und 55 bis 57 mit Chitinlösung)

### Beispiel 40:

23,0 kg Obsttrester
2,0 kg Splintholz (Kiefer, Tanne, Fichte)
1,0 kg Mischung aus Alginaten, Pektinen und Algenmehl
79,0 kg Tonerde-Mischung (Bentonite und Montmorillonite)

### Beispiel 41:

20,0 kg Citrustrester
5,0 kg Splintholz (wie oben)
80,0 kg Magnesiumcarbonat
Statt Magnesiumcarbonat kann auch Magnesiumsulfat oder MgO verwendet werden.

### Beispiel 42:

20,0 kg Obsttrester
80,0 kg Calciumcarbonat
(Animpfung mit Bacillus megatherium)

### Beispiel 43:

20,0 kg Biertrester
10,0 kg Kernholz (Buche)
70,0 kg Tonerde-Mischung (Bentonite und Montmorillonite)

### Beispiel 44:

15,0 kg Obsttrester
5,0 kg Splintholz (Kiefer, Tanne, Fichte)
5,0 kg Kernholz (Buche)
70,0 kg Calciumcarbonat
(Animpfung mit Bacillus subtilis)

### Beispiel 45:

15,0 kg Citrustrester
5,0 kg Splintholz (Kiefer, Tanne, Fichte)
5,0 kg Kernholz (Buche)
1,0 kg Luzernemehl
69,0 kg Calciumcarbonat
Statt Luzernemehl können auch Alginate und/oder Pektine und/oder Algenmehl verwendet werden.

### Beispiel 46:

25,0 kg Obsttrester
5,0 kg Kernholz (Buche)
1,0 kg Luzernemehl
69,0 kg Magnesiumsulfat
Statt Luzernemehl können auch Alginate und/oder Pektine und/oder Algenmehl verwendet werden.

### Beispiel 47:

10,0 kg Splintholz (Kiefer, Tanne, Fichte)
20,0 kg Biertrester
35,0 kg Blutmehl getrocknet
35,0 kg Calciumcarbonat
(Animpfung mit Penicillium chrysogenum)

### Beispiel 48:

10,0 kg Splintholz (Kiefer, Tanne, Fichte)
20,0 kg Biertrester
35,0 kg Blutmehl getrocknet
35,0 kg Magnesiumsulfat
Statt Magnesiumsulfat kann auch Magnesiumcarbonat oder MgO verwendet werden.

### Beispiel 49:

30,0 kg Obsttrester/Citrustrester (1 : 1)
35,0 kg Hornmehl oder Fischmehl, Fischpreßsaft getrocknet, Futter
knochenschrot, Knochenmehl, Tiermehl, Fleischfuttermehl 35,0 kg Magnesiumsulfat
Statt Magnesiumsulfat kann auch Magnesiumcarbonat oder MgO verwendet werden.

### Beispiel 50:

30,0 kg Biertrester
35,0 kg Hornmehl oder Fischmehl, Fischpreßsaft getrocknet, Futterknochenschrot, Knochenmehl, Tiermehl, Fleischfuttermehl
35,0 kg Calciumcarbonat

### Beispiel 51:

20,0000 kg Obsttrester
5,0000 kg Splintholz (Kiefer, Tanne, Fichte)
5,0000 kg Kernholz (Buche)
43,0205 kg Spurenelemente und Makroelemente:
14,0000 kg Stickstoff wasserlöslich
10,0000 kg Phosphate wasserlöslich
14,0000 kg Kali
4,0000 kg Magnesiumsulfat
0,5000 kg Mangansulfat
0,2500 kg Kupfersulfat
0,2500 kg Borax
0,0005 kg Cobaltsulfat
0,0200 kg Zinksulfat
26,9795 kg Calciumcarbonat

### Beispiel 52:

20,0000 kg Obsttrester
5,0000 kg Obstschlempe
5,0000 kg Bentonit
43,0205 kg Spurenelemente und Makroelemente:
14,0000 kg Stickstoff wasserlöslich
10,0000 kg Phosphate wasserlöslich
14,0000 kg Kali
4,0000 kg Magnesiumsulfat
0,5000 kg Mangansulfat
0,2500 kg Kupfersulfat
0,2500 kg Borax
0,0005 kg Cobaltsulfat
0,0200 kg Zinksulfat
26,9795 kg Magnesiumcarbonat

### Beispiel 53:

25,0 kg Obsttrester
14,0 kg Harnstoff
10,0 kg Kaliumsulfat
5,0 kg Magnesiumsulfat
6,0 kg Knochenpräzipitat
20,0 kg Bentonit/Montmorillonit
2,0 kg Spurenelemente
18,0 kg Calciumcarbonat

### Beispiel 54:

20,0 kg Obsttrester
5,0 kg Biertrester
30,0 kg Fischmehl
15,0 kg Bentonit
2,0 kg Spurenelemente
5,0 kg Wildkräutermehl
3,0 kg Melasse (Florakal ^{R})
5,0 kg Calciumcarbonat
5,0 kg Magnesiumcarbonat
1,0 kg Knochenasche
9,0 kg Knochenpräzipitat
(Animpfung mit Aspergillus)

### Beispiel 55:

20,0 kg Obsttrester
5,0 kg Obstschlempe
10,0 kg Melasse (Florakal ^{R})
10,0 kg Melasse (MONEX ^{R})
10,0 kg Holzkern (Splintholz/Kernholz 1 : 1)
10,0 kg CaCO₃
5,0 kg MgCO₃
5,0 kg Knochenpräzipitat
1,0 kg Knochenasche
1,0 kg Spurenelemente
15,0 kg Bentonit/Montmorillonit
2,0 kg Pflanzengranulat
6,0 kg Fischmehl

### Beispiel 56:

25,0 kg Obsttrester
5,0 kg Melasse (Florakal ^{R})
5,0 kg Melasse (MONEX ^{R})
10,0 kg Holzkern (Splintholz/Kernholz 3 : 1)
10,0 kg CaCO₃
5,0 kg MgCO₃
5,0 kg K₂SO₄
5,0 kg Knochenpräzipitat
2,0 kg Knochenasche
1,0 kg Spurenelemente/Biodan
1,0 kg Pflanzengranulat
15,0 kg Bentonit/Montmorillonit
10,0 kg Fischmehl
1,0 kg Algenmehl
(Animpfung mit Bacillus-Sporen)

### Beispiel 57:

25,0 kg Obsttrester/Obstschlempe/Biertreber (etwa 1 : 1 : 1)
1,0 kg Vitaminvormischung (Vitamine A, B1, B2, B6, B12, C, D3, E)
1,0 kg Aminosäurevormischung (Methionin/Cystein/Glutaminsäure)
2,0 kg Flugasche Braunkohle
2,0 kg Flugasche Steinkohle
2,5 kg Melasse (Florakal ^{R})
2,5 kg Melasse (MONEX ^{R})
10,0 kg Holzmehl
6,0 kg Knochenpräzipitat
12,0 kg Harnstoff
25,0 kg Calciumcarbonat
2,0 kg Wildkräutermehl
1,0 kg Knochenasche
10,0 kg Bentonit
(Animpfung mit Penicillium)

### Beispiel 58

Die Rezepturen der Beispiele 38, 40, 46, 50, 51 bis 53 und 57 wurden in der Weise abgewandelt, daß die Gelatine- bzw. Chitinkomponenten in die Mischung des Kernmaterials eingegeben wurden. Aus den so erhaltenen Mischungen wurden durch Granulieren Trestergranulate gemäß der Erfindung hergestellt, die keine Umhüllung aufwiesen. Diese Trestergranulate ohne Verkapselung - wie auch die in den Beispielen 38 bis 57 beschriebenen verkapselten Trestergranulate - ließen sich aufgrund ihrer Härte problemlos handhaben, ohne Stabilitätsverlust über lange Zeit (10 Monate) lagern und eigneten sich hervorragend als Düngermaterialien bzw. Bodenvernbesserer.

### Beispiel 59

Erfindungsgemäße verkapselte Trestergranulate wurden in einem Freilandversuch über zwölf Monate auf ihre Eignung in der Verwendung als Düngermaterial bzw. Bodenverbesserer getestet. Der Boden wies einen außerordentlich hohen Kleieanteil auf.

Als Dünger wurde das Material der Beispiele 40, 44, 53, 54 und 56 verwendet. Der Kernholz- und Splintholzanteil im Kern hatte eine Körnung von 2,5 bis 3,0 mm (durchschnittlicher Durchmesser). Zur Beurteilung des Einflusses des verkapselten Trestergranulats auf die Bodenbeschaffenheit wurde dieses in einer Menge von 400 g/m² leicht in den Erdboden eingeharkt. Die Versuchsflächen hatten eine Größe von 15 m². Als Vergleich diente eine ebenfalls 15 m² große Fläche, in die kein verkapseltes Trestergranulat eingeharkt wurde. Alle Flächen wurden über einen Zeitraum von sieben Monaten nicht behandelt, sondern nur regelmäßig schwach bewässert.

Nach sieben Monaten konnten im Boden keine Trester- oder Holzpartikel mehr gefunden werden. Offensichtlich waren diese durch Mikroorganismen abgebaut worden.

Die Bodenbeschaffenheit hatte sich innerhalb der Versuchszeit auf dem Feld, das mit dem erfindungsgemäßen verkapselten Trestergranulat behandelt worden war, deutlich geändert. Im Vergleich zur unbehandelten Fläche zeigte sich eine deutliche Bodenverbesserung. Der Boden hatte eine feinkrümelige Beschaffenheit und war sehr gut belüftet. Ebenfalls trat auf der behandelten Fläche keine Staunässe auf. Der Boden besaß also eine gute Drainierung. Die Analysenwerte des Bodenmaterials zeigten eine stetige Verbesserung der Bodenqualität.

Im Gegensatz dazu zeigte sich auf der unbehandelten Kontrollfläche deutlich die schlechte Drainierung in Form von auftretender Staunässe. Die Analysenwerte verbesserten sich nicht.

## Patentansprüche

1. In partikulärer Form vorliegendes Material, umfassend
(a) einen Kern aus einem organischen Material natürlicher Herkunft aus der Gruppe Holz, Trester und deren Mischungen; und
(b) eine entweder in den Kern eingearbeitete oder den Kern umhüllende Masse, die ein oder mehrere härtbare(s), wasserlösliche(s) oder in Wasser dispergierbare(s) oder in Wasser quellbare(s) natürliche(s) Polymer(e) oder ein oder mehrere davon abgeleitete(s) Derivat(e) oder deren Mischungen umfaßt, wobei die Masse in dem in partikulärer Form vorliegenden Material ausgehärtet ist.

2. Partikelmaterial nach Anspruch 1, welches im Kern eine oder mehrere Holzsorte(n) in zerkleinerter Form umfaßt.

3. Partikelmaterial nach einem der Ansprüche 1 oder 2, welches im Kern eine oder mehrere Trestersorte(n) in zerkleinerter Form umfaßt.

4. Partikelmaterial nach einem oder mehreren der Ansprüche 1 bis 3, dessen Kern zusätzlich mit einem oder mehreren organischen Stickstoffträger(n) aus der Gruppe Obstschlempe, Obsttrester, Citrustrester, Weintrester, Biertrester, Brennesselmehl. Wildkräutermehl und Melasse beaufschlagt ist.

5. Partikelmaterial nach einem oder mehreren der Ansprüche 1 bis 4, dessen Kern zusätzlich stabilisierende Komponenten umfaßt, die ein oder mehrere härtbare(s), wasserlösliche(s) oder in Wasser dispergierbare(s) oder quellbare(s) natürliche(s) Polymer(e) oder ein oder mehrere davon abgeleitete(s) Derivat(e) umfassen.

6. Partikelmaterial nach einem oder mehreren der Ansprüche 1 bis 5, welches im Kern zusätzlich zu dem organischen Material oder in teilweisem Ersatz des organischen Materials aus der Gruppe Holz und Trester und deren Mischungen Obstschlempe enthält.

7. Partikelmaterial nach einem oder mehreren der Ansprüche 1 bis 6, worin die Umhüllung ein oder mehrere Polymer(e) aus der Gruppe Proteine, Polysaccharide und deren Mischungen oder ein oder mehrere davon abgeleitete(s) Derivat(e) oder deren Mischungen umfaßt.

8. Partikelmaterial nach einem oder mehreren der Ansprüche 1 bis 7, welches besteht aus einem Kern aus einer oder mehreren Holzsorten in zerkleinerter Form und einer den Kern umgebenden Umhüllung aus einem härtbaren, wasserlöslichen oder in Wasser quellbaren Polymer.

9. Partikelmaterial nach einem oder mehreren der Ansprüche 1 bis 7, enthaltend eine oder mehrere Trestersorte(n) in zerkleinerter Form und stabilisierende Komponenten, die ein oder mehrere härtbare(s), wasserlösliche(s) oder in Wasser dispergierbare(s) oder quellbare(s) natürliche(s) Polymer(e) oder ein oder mehrere davon abgeleitete(s) Derivat(e) umfassen.

10. Partikelmaterial nach einem oder mehreren der Ansprüche 1 bis 7, bestehend aus einem eine oder mehrere Trestersorte(n) in zerkleinerter Form und stabilisierende Komponenten, die ein oder mehrere härtbare(s), wasserlösliche(s) oder in Wasser dispergierbare(s) oder quellbare(s) natürliche(s) Polymer(e) oder ein oder mehrere davon abgeleitete(s) Derivat(e) umfassen, enthaltenden granulierten, gepreßten oder pelletierten Kern.

11. Partikelmaterial nach einem oder mehreren der Ansprüche 1 bis 7, bestehend aus einem Kern aus einer oder mehreren Trestersorten in zerkleinerter Form und einer den Tresterkern umgebenden Umhüllung aus einem oder mehreren härtbaren, wasserlöslichen oder in Wasser dispergierbaren oder quellbaren natürlichen Polymer(en) oder einem oder mehreren davon abgeleiteten Derivat(en).

12. Verwendung eines oder mehrerer der Partikelmaterialien nach einem oder mehreren der Ansprüche 1 bis 11 als Düngermaterial und/oder Bodenverbesserer.

## Claims

1. A particulate material comprising
(a) a core consisting of an organic material of natural origin taken from the group consisting of wood, draff and mixtures thereof; and
(b) a mass incorporated into or surrounding the core and comprising one or several natural polymer(s) or one or several derivate(s) or mixture(s) thereof which can be hardened and can be dissolved or dispersed or swollen in water, the mass being hardened in the particulate material.

2. A particulate material according to claim 1, which comprises one or several sort(s) of crushed wood in the core.

3. A particulate material according to claim 1 or 2, which comprises one or several sort(s) of crushed draff in the core.

4. A particulate material according to one or several of claims 1 to 3 wherein one or several organic nitrogen carrier(s) taken from the group consisting of fruit distiller's wash, draff from fruit, draff from citrus fruits, draff from grapes, draff from beer production, flour made of stinging nettles, flour made of wild herbes and molasses are added to the core.

5. A particulate material according to one or several of claims 1 to 4 wherein the core, in addition, comprises stabilizing components comprising one or several natural polymer(s) or one or several derivate(s) thereof which can be hardened and can be dissolved or dispersed or swollen in water.

6. A particulate material according to one or several of claims 1 to 5, which contains fruit distiller's wash in addition to the organic material or as a partial substitute for the organic materials taken from the group consisting of wood and draff and mixtures thereof.

7. A particulate material according to one or several of claims 1 to 6 wherein the coating comprises one or several polymer(s) taken from the group consisting of proteins, polysaccharides and mixtures thereof, or one or several derivate(s) or mixture(s) thereof.

8. A particulate material according to one or several of claims 1 to 7, which consists of a core consisting of one or several sort(s) of crushed wood, and a coating surrounding the core which consists of a polymer which can be hardened and can be dissolved or swollen in water.

9. A particulate material according to one or several of claims 1 to 7, which contains one or several sort(s) of crushed draff and stabilizing components comprising one or several natural polymer(s) or one or several derivate(s) thereof which can be hardened and can be dissolved or dispersed or swollen in water.

10. A particulate material according to one or several of claims 1 to 7, which consists of a granuled, pressed or pelletized core containing one or several sort(s) of crushed draff and stabilizing components comprising one or several natural polymer(s) or one or several derivate(s) thereof which can be hardened and can be dissolved or dispersed or swollen in water.

11. A particulate material according to one or several of claims 1 to 7 which consists of a core consisting of one or several sort(s) of crushed draff and a coating surrounding the draff core which consists of one or several natural polymer(s) or one or several derivate(s) thereof which can be hardened and can be dissolved or dispersed or swollen in water.

12. Use of one or several of the particulate material(s) according to one or several of claims 1 to 11 as a fertilizer and/or as an agent for soil improvement.

## Revendications

1. Matériau se présentant sous forme particulaire, comprenant :
(a) Un noyau en une matière organique d'origine naturelle du groupe du bois, des marc et de leurs mélanges ; et
(b) Soit une masse introduite dans le noyau ou enrobant le noyau qui comprend un ou plusieurs polymère(s) naturel(s), durcissable(s), soluble(s) dans l'eau ou émulsionnable(s) dans l'eau, ou gonflant(s) dans l'eau, ou un ou plusieurs de ses/leurs dérivés(s) ou leurs mélange(s), la masse étant durcie dans le matériau se présentant sous forme particulaire.

2. Matériau en particules selon la revendication 1. qui comprend dans le noyau une ou plusieurs sorte(s) de bois sous forme fragmentée.

3. Matériau en particules selon l'une des revendications 1. ou 2., qui comprend dans le noyau une ou plusieurs sorte(s) de marc sous forme fragmentée.

4. Matériau en particules selon l'une ou plusieurs des revendications 1. à 3., dont le noyau en plus est revetû d'un ou de plusieurs support(s) azoté(s) organiques du groupe pulpe de fruits, marc de fruits, marc d'agrumes, marc de raisin, drêches, farine d'ortie, farine d'herbes sauvages et mélasse.

5. Matériau en particules selon l'une ou plusieurs des revendications 1. à 4., dont le noyau comprenant en plus des constituants stabilisants, qui englobent un ou plusieurs polymère(s) naturel(s), durcissable(s), soluble(s) dans l'eau ou émulsionnable(s) dans l'eau, ou gonflant(s), ou un ou plusieurs de ses/leurs dérivés(s)

6. Matériau en particules selon l'une ou plusieurs des revendications 1 à 5 qui contient dans le noyau des pulpes de fruits en plus des matières organiques ou en remplacement partiel des matières organiques du groupe des bois et des marcs et de leurs mélanges.

7. Matériau en particules selon l'une ou plusieurs des revendications 1 à 6 dans lequel, l'enrobage comprend un ou plusieurs polymère(s) du groupe des protéines, des polysaccharides et de leurs mélange ou un ou plusieurs de leurs dérivé(s).

8. Matériau en particules selon l'une ou plusieurs des revendication 1 à 7 qui est constitué d'un noyau d'une ou de plusieurs sortes de bois sous forme de fragments et d'un enrobage l'entourant en un polymère durcissable, soluble dans l'eau ou gonflant dans l'eau.

9. Matériau en particules selon l'une ou plusieurs des revendications 1 à 7 contenant une ou plusieurs sortes de marcs sous forme de fragments et des constituants stabilisants, qui comprennent un ou plusieurs polymère(s) durcissable(s) soluble(s) dans l'eau ou émulsionnable(s) dans l'eau ou gonflant(s) ou un ou plusieurs de ses/leurs dérivés.

10. Matériau en particules selon l'une ou plusieurs des revendications 1 à 7, constitué d'un noyau granulé, pressé ou aggloméré contenant une ou de plusieurs sorte(s) de marc(s) broyés et des constituants stabilisants, qui comprennent un ou plusieurs polymère(s) naturel(s) durcissable(s), soluble(s) dans l'eau ou émulsionnable(s) dans l'eau ou gonflant(s) ou un ou plusieurs de ses/leur(s) dérivé(s)

11. Matériau en particules selon l'une ou plusieurs des revendications 1 à 7 constitué d'un noyau en une ou plusieurs sortes de marcs sous forme de fragements et d'un enrobage entourant le noyau de marc en un ou en plusieurs polymère(s) naturels durcissables, solubles dans l'eau ou émulsionnables dans l'eau ou gonflants ou d'un ou plusieurs de ses/leurs dérivé(s).

12. Utilisation d'un ou plusieurs des matériaux en particules selon l'une ou plusieurs des revendications 1 à 11 comme engrais ou comme agent d'amélioration du sol.
